# EUROPÄISCHE PATENTSCHRIFT

(11) **EP 1 979 780 B1**
(45) Veröffentlichungstag und Bekanntmachung des Hinweises auf die Patenterteilung: **17.12.2014**
(21) Anmeldenummer: 07703146.6
(22) Anmeldetag: 30.01.2007
(51) Int. Cl.: G02B 21/16

(54) **MIKROSKOPIESYSTEM**
MICROSCOPE SYSTEM
SYSTÈME DE MICROSCOPIE

(30) Priorität: 30.01.2006 DE 102006004232
(43) Veröffentlichungstag der Anmeldung: 15.10.2008
(60) Teilanmeldung: 13186914.1
(73) Patentinhaber: Carl Zeiss Meditec AG, 07745 Jena (DE)
(72) Erfinder: STEFFEN, Joachim, 73463 Westhausen (DE); JESS, Helge, 73466 Oberkochen (DE); HAUGER, Christoph, 73431 Aalen (DE)
(74) Vertreter: Diehl & Partner GbR
(86) Internationale Anmeldenummer: PCT/EP2007/000792
(87) Internationale Veröffentlichungsnummer: WO 2007/085496

(56) Entgegenhaltungen:
- EP-A2- 0 339 582
- WO-A-02/41064
- DE-A1- 10 339 784
- DE-A1- 19 829 944
- US-A- 5 371 624
- US-A- 6 094 274
- US-A1- 2005 157 385

## Beschreibung

Die Erfindung betrifft ein Mikroskopiesystem nach dem Oberbegriff des unabhängigen Anspruch 1. Genauer gesagt betrifft die vorliegende Erfindung ein Mikroskopiesystem, welches geeignet ist, eine sequentiell Beobachtung eines Untersuchungsobjektes unter Verwendung verschiedener Fluoreszenzfarbstoffe zu ermöglichen. Bei dem Mikroskopiesystem kann es sich beispielsweise um ein Stereomikroskop und insbesondere ein Operationsmikroskop handeln.

Fluoreszenzfarbstoffe, die in Folge einer Beleuchtung mit elektromagnetischer Anregungsstrahlung eines ersten Wellenlängenbereichs (der im Folgenden als Anregungsband bezeichnet wird) eine elektromagnetische Fluoreszenzstrahlung eines von dem ersten Wellenlängenbereich (d.h. dem Anregungsband) verschiedenen zweiten Wellenlängenbereichs (der im Folgenden als Fluoreszenzband bezeichnet wird) abstrahlen, werden in der Medizin für verschiedene Zwecke eingesetzt. Beispiele sind die Sichtbarmachung von bestimmten Gewebearten, Gewebestrukturen, Gewebefunktionen usw.. Hierbei wird einem zu untersuchenden Patienten Fluoreszenzfarbstoff oder ein Vorläufer eines solchen Fluoreszenzfarbstoffs verabreicht. Der Farbstoff reichert sich in bestimmten Gewebearten bzw. Gewebestrukturen des Patienten an, und durch Beobachtung der Fluoreszenzstrahlung können diese Gewebestrukturen bzw. Gewebearten oder aber auch der Vorgang der Anreicherung sichtbar gemacht und von einem Beobachter lokalisiert werden. Hierzu werden erforderlichenfalls weiter spezielle optische Hilfsmittel (wie beispielsweise Infrarot- oder UV-Kameras und optische Verstärker) eingesetzt, da die Fluoreszenzstrahlung ggf. sehr schwach ist und/oder außerhalb des visuell sichtbaren Spektrums (ca. 380-780 nm) liegt.

Ein Beispiel für einen geeigneten Fluoreszenzfarbstoff ist Indocyaningrün (ICG). Das Anregungsband der Fluoreszenz dieses Fluoreszenzfarbstoffs liegt bei 400 nm bis 780 nm und das Fluoreszenzband bei ca. 830 nm (und damit außerhalb des sichtbaren Bereichs im Nah-Infrarotbereich). Zur mikroskopischen Untersuchung eines mit ICG angereicherten Gewebes mittels eines Mikroskopiesystems wird in einem Beleuchtungsstrahlengang vor einer Lichtquelle (z.B. Laserlichtquelle oder einer Xenonlampe oder einer Halogenlampe) ein Beleuchtungs-Bandpaßfilter angeordnet, dessen Filtercharakteristik so gewählt ist, daß er Beleuchtungsstrahlung des Anregungsbands für ICG (400 nm bis 780 nm) zu dem Gewebe passieren läßt. Das Gewebe wird durch eine Mikroskopieoptik über einen ersten Beobachtungsstrahlengang auf eine Infrarot-Kamera (IR-Kamera) abgebildet, wobei in dem ersten Beobachtungsstrahlengang vor der IR-Kamera ein Beobachtungs-Bandpassfilter angeordnet ist, welcher elektromagnetische Strahlung des Fluoreszenzbands von ICG (ca. 830 nm), nicht jedoch die Beleuchtungsstrahlung hindurchtreten läßt. Durch die IR-Kamera erzeugte Bilddaten können durch elektronische Bildverarbeitung über einen Monitor im sichtbaren Bereich dargestellt werden, so daß der erste Beobachtungsstrahlengang eine Beobachtung der Fluoreszenzstrahlung erlaubt. Gleichzeitig wird das Gewebe durch die Mikroskopieoptik über einen zweiten Beobachtungsstrahlengang ohne Beobachtungsfilter auf eine Beobachtungskamera (beispielsweise eine 3-Chip CCD-Kamera) und/oder ein Okular abgebildet, wobei zur Vermeidung von Farbfehlern durch den Infrarotanteil der Fluoreszenzstrahlung vor der Beobachtungskamera ein Infrarot-Sperrfilter (IR-Sperrfilter) vorgesehen ist, welcher Wellenlängen von über ca. 700 nm nicht hindurchläßt. Somit erlaubt der zweite Beobachtungsstrahlengang eine Beobachtung des Gewebes unter Beleuchtungsstrahlung. Dabei ist es bekannt, die von der IR-Kamera und der Beobachtungskamera des ersten bzw. zweiten Beobachtungsstrahlengangs elektronisch zu überlagern und entsprechend darzustellen.

Ein entsprechender Aufbau ist beispielsweise aus der deutschen Offenlegungsschrift DE 103 39 784 A1 bekannt.

Die vorstehend beschriebene gleichzeitige Beobachtung des Untersuchungsobjektes unter Beleuchtungsstrahlung und der Fluoreszenzstrahlung erleichtert eine Orientierung hinsichtlich des Untersuchungsobjektes erheblich. Dies ist beispielsweise im Rahmen einer Operation von Bedeutung.

Weiter ist die Verwendung von Protoporphyrin IX als Fluoreszenzfarbstoff bekannt. Das Anregungsband der Fluoreszenz dieses Fluoreszenzfarbstoffs liegt bei ca. 400 nm und das Fluoreszenzband zwischen ca. 630 und 730 nm. Entsprechend wird in einem Mikroskopiesystem zur Beleuchtung ein aus zwei Bandpaßfiltern gebildeter Beleuchtungsfilter verwendet, der lediglich Beleuchtungsstrahlung im Wellenlängenband von 400-430 nm zu einem mit Protoporphyrin IX angereicherten Gewebe passieren läßt. In einem ersten Beobachtungsstrahlengang ist ein Beobachtungsfilter angeordnet, der die Fluoreszenzstrahlung hindurchtreten läßt und die Beleuchtungsstrahlung nicht hindurchtreten läßt. Da das Fluoreszenzband überwiegend im sichtbaren Bereich liegt und nur teilweise mit dem Nahbereichs-Infrarotbereich überlappt, kann eine Beobachtung mit einer konventionellen Beobachtungskamera erfolgen. Erfolgt die Beobachtung mittels einer konventionellen Beobachtungskamera, so darf vor dieser Beobachtungskamera jedoch kein IR-Sperrfilter angeordnet sein, da sonst ein Teil der Fluoreszenzstrahlung die Kamera nicht erreichen kann.

Weitere Fluoreszenzfarbstoffe sind dem Fachmann bekannt und/oder können durch den Fachmann leicht aufgefunden werden. Dabei sind bei Untersuchungen an Lebewesen neben einer möglichst hohen Intensität der Fluoreszenzstrahlung und einem ausreichenden Abstand zwischen dem jeweiligen Anregungsband und dem Fluoreszenzband zusätzlich eine gute Verträglichkeit und Abbaubarkeit des Fluoreszenzfarbstoffes im betrachteten Organismus wünschenswert.

Aus den vorstehenden Beispielen wird deutlich, daß jeder Fluoreszenzfarbstoff entsprechend seines Anregungsbands und Fluoreszenzbands eine Anpassung eines verwendeten Mikroskopiesystems erforderlich macht. Dies wird insbesondere anhand der Verwendung des IR-Sperrfilters vor der Beobachtungskamera deutlich, welcher IR-Sperrfilters bei der Verwendung von ICG als Fluoreszenzfarbstoff vor der Beobachtungskamera vorgesehen sein muß, bei der Verwendung von Protoporphyrin IX als Fluoreszenzfarbstoff jedoch nicht vorgesehen sein darf.

Aufgrund der großen und z.T. unterschiedlichen Anzahl an für eine Fluoreszenzbeobachtung erforderlichen Filtern ist ein Umrüsten eines Mikroskopiesystems für eine Beobachtung von verschiedenen Fluoreszenzfarbstoffen sehr aufwendig. Dies hat zur Folge, daß beispielsweise im Rahmen einer Operation lediglich ein Fluoreszenzfarbstoff verwendet wird, da ein langwieriges Umrüsten des Mikroskops während der Operation nicht zu verantworten ist. Häufig ist ein derartiges Umrüsten des Mikroskops auch aus Gründen der Hygiene nicht möglich.

Zudem besteht die Gefahr, daß Filter verschiedener Fluoreszenzfarbstoffe beim Umrüsten versehentlich miteinander vermischt werden und so die Abstimmung der einzelnen Filter verloren geht. Wird für verschiedene Fluoreszenzfarbstoffe eine unterschiedliche Anzahl von Filtern verwendet, besteht bei einem Umrüsten des Mikroskopiesystems zwischen den Fluoreszenzfarbstoffen durch Austausch der Filter zusätzlich die Gefahr, daß Filter irrtümlich im Mikroskopiesystem verbleiben oder gar nicht erst eingesetzt werden.

Die Verwendung von nicht auf einen verwendeten Fluoreszenzfarbstoff abgestimmten Filtern bleibt leicht unbemerkt, da das Fehlen von Fluoreszenzstrahlung auch auf eine nicht vorhandene Anreicherung des Fluoreszenzfarbstoffs im Untersuchungsobjekt (z.B. wegen nicht vorhandenem Tumorgewebe etc.) zurückzuführen sein kann. Bei Operationsmikroskopen kann ein derartiger Fehler ernste gesundheitliche Folgen für einen Patienten haben, da Tumorgewebe im Körper verbleiben und eine weitere Operation erforderlich machen kann. Weiter besteht die Gefahr, daß einem Patienten bei dem Versuch, doch noch eine Fluoreszenzstrahlung sichtbar zu machen, unnötig große Mengen an Fluoreszenzfarbstoff verabreicht werden, was zu allergischen Reaktionen führen kann.

Die europäische Offenlegungsschrift EP 0 339 582 A2 offenbart ein Mikroskopiesystem mit den Merkmalen des Oberbegriffs des unabhängigen Anspruchs 1.

Ausgehend hiervon ist es Aufgabe der vorliegenden Erfindung, ein Mikroskop und insbesondere ein Operationsmikroskop zur Verfügung zu stellen, welches die sequentielle Beobachtung von Fluoreszenzstrahlung verschiedener Fluoreszenzfarbstoffe in einer Objektebene auf besonders einfache und zuverlässige Weise erlaubt.

Die vorstehende Aufgabe wird bei einem Mikroskopiesystem zur Beobachtung von Fluoreszenzstrahlung verschiedener Fluoreszenzfarbstoffe in einer Objektebene mit den Merkmalen des Oberbegriffs des unabhängigen Anspruch 1 durch die Merkmale des kennzeichnenden Teils des unabhängigen Anspruch 1 gelöst.

Ein Beleuchtungssystem des Mikroskopiesystems zur Beleuchtung einer Objektebene mit Beleuchtungsstrahlung weist wenigstens zwei verschiedene Betriebszustände auf, wobei in einem der wenigstens zwei Betriebszustände die Beleuchtungsstrahlung ein Spektrum aufweist, welches ein erstes Anregungsband eines ersten Fluoreszenzfarbstoffes umfaßt und gleichzeitig teilweise frei von einem Anregungsband eines anderen Fluoreszenzfarbstoffes ist und in wenigstens einem anderen Betriebszustand die Beleuchtungsstrahlung ein Spektrum aufweist, welches das Anregungsband des anderen Fluoreszenzfarbstoffes umfasst. Weiter weist auch ein Beobachtungssystem des Mikroskopiesystems zur Bereitstellung eines ersten Beobachtungsstrahlengangs zur optischen Abbildung der Objektebene wenigstens zwei verschiedene Betriebszustände auf, wobei in einem der wenigstens zwei Betriebszustände in dem ersten Beobachtungsstrahlengang geführte Beobachtungsstrahlung zumindest abschnittsweise ein Spektrum aufweist, welches ein erstes Fluoreszenzband des ersten Fluoreszenzfarbstoffes umfaßt und in wenigstens einem anderen Betriebszustand in dem ersten Beobachtungsstrahlengang geführte Beobachtungsstrahlung zumindest abschnittsweise teilweise frei von dem ersten Fluoreszenzband des ersten Fluoreszenzfarbstoffes ist.

In dieser Anmeldung wird unter einem Spektrum, das teilweise frei von einem Band ist, verstanden, daß nach einer Normierung von sowohl Spektrum als auch Band weniger als 40% und vorzugsweise weniger als 20% und besonders bevorzugt weniger als 10% der Fläche des Bandes von dem Spektrum überlappt werden. Weiter ist für den Fachmann offensichtlich, daß das Beleuchtungssystem und das Beobachtungssystem jeweils mehr als zwei und auch eine unterschiedliche Anzahl von Betriebszuständen aufweisen können, und daß das Beobachtungssystem mehr als nur einen Beobachtungsstrahlengang aufweisen kann.

Ferner weist das Mikroskopiesystem eine Steuerung auf, welche konfiguriert ist, um wahlweise sowohl das Beleuchtungssystem als auch das Beobachtungssystem in den ersten Betriebszustand zu schalten oder sowohl das Beleuchtungssystem als auch das Beobachtungssystem in den zweiten Betriebszustand zu schalten.

Somit bewirkt die Steuerung eine (beispielsweise mechanische und/oder elektrische) Kopplung der Betriebszustände des Beleuchtungssystems und des Beobachtungssystems. Dabei kann ein Umschalten der Betriebszustände beispielsweise wahlweise durch die Steuerung initiiert werden, oder aber erfolgen, sobald durch die Steuerung eine Änderung eines Betriebszustands des Beleuchtungssystems und/oder des Beobachtungssystems detektiert wird. Weiter kann ein Umschalten der Betriebszustände des Beleuchtungssystems und des Beobachtungssystems gemäß einer Ausführungsform im wesentlichen gleichzeitig, d.h. innerhalb eines Abstands von weniger als 10 Sekunden und vorzugsweise weniger als 1 Sekunde erfolgen.

Indem das Beleuchtungssystem und des Beobachtungssystem jeweils wenigstens zwei jeweils an verschiedene Fluoreszenzfarbstoffe angepaßte Betriebszustände aufweisen, und die Steuerung die Betriebszustände des Beleuchtungssystems und des Beobachtungssystems automatisch so umschaltet, daß die Betriebszustände jeweils an den zu beobachtenden Fluoreszenzfarbstoff angepaßt sind, kann das Mikroskopiesystem besonders schnell, einfach und zuverlässig zwischen der Beobachtung von verschiedenen Fluoreszenzfarbstoffen umgeschaltet werden. Dies erlaubt ein Beobachten verschiedener Fluoreszenzen mittels des Mikroskopiesystems auch unter schwierigen Bedingungen, wie z.B. während einer Operation. Weiter wird eine fehlerhafte Beobachtung aufgrund mangelnder Abstimmung des Beleuchtungssystem und des Beobachtungssystem durch das Vorsehen der Steuerung auf besonders einfache und wirkungsvolle Weise vermieden.

Weiter ist in dem ersten Beobachtungsstrahlengang ein von einem Infrarotfilterträger getragener Infrarot-Sperrfilter angeordnet, welcher Infrarotfilterträger einen ersten Betriebszustand aufweist, in dem der Infrarot-Sperrfilter in dem ersten Beobachtungsstrahlengang angeordnet ist, und einen zweiten Betriebszustand aufweist, in dem der erste Beobachtungsstrahlengang frei von dem Infrarot-Sperrfilter ist. Dabei wird unter einem Infrarot-Sperrfilter ein Filter verstanden, der undurchlässig für Nahbereichs-Infrarotstrahlung und beispielsweise für Nahbereichs-Infrarotstrahlung mit einer Wellenlänge größer 700 nm ist. Dabei ist die Steuerung konfiguriert, um wahlweise sowohl das Beleuchtungssystem als auch das Beobachtungssystem und den Infrarotfilterträger in den ersten Betriebszustand zu schalten oder sowohl das Beleuchtungssystem als auch das Beobachtungssystem und den Infrarotfilterträger in den zweiten Betriebszustand zu schalten. Hierdurch stellt die Steuerung automatisch sicher, daß auch der Betriebszustand des Infrarotfilterträgers dem jeweils untersuchten Fluoreszenzfarbstoff entspricht.

Weiterhin ist in wenigstens einem Betriebszustand des Beleuchtungssystems in einem von dem Beleuchtungssystem bereitgestellten Beleuchtungsstrahlengang ein von einem Beleuchtungsfilterträger getragener Beleuchtungsfilter angeordnet, der für das Anregungsband eines zu beobachtenden Fluoreszenzfarbstoffes durchlässig und gleichzeitig für das Anregungsband eines anderen Fluoreszenzfarbstoffes im wesentlichen undurchlässig ist.

In dieser Anmeldung wird unter einem Filter, der für ein Band im wesentlichen durchlässig ist, verstanden, dass der Filter Strahlung in einem Wellenlängenbereich, der wenigstens 50% und vorzugsweise wenigstens 70% und besonders bevorzugt wenigstens 90% der Breite des Bandes umfasst, zu mehr als 50% und bevorzugt zu mehr als 70% und besonders bevorzugt zu mehr als 90% (bezogen auf die Intensität der Strahlung) hindurchlässt. Entsprechend wird unter einem Filter, der für ein Band im wesentlichen / teilweise undurchlässig ist, verstanden, dass der Filter Strahlung in einem Wellenlängenbereich, der höchstens 40% und vorzugsweise höchstens 20% und besonders bevorzugt höchstens 10% der Breite des Bandes umfasst, zu mehr als 50% (bezogen auf die Intensität der Strahlung) hindurchläßt.

Weiter ist erfindungsgemäß in wenigstens einem Betriebszustand des Beobachtungssystems in dem Beobachtungsstrahlengang ein von einem ersten Beobachtungsfilterträger getragener Beobachtungsfilter angeordnet, der für das Fluoreszenzband eines beobachteten Fluoreszenzfarbstoffes durchlässig und gleichzeitig für das Fluoreszenzband eines anderen Fluoreszenzfarbstoffes im wesentlichen undurchlässig ist.

Gemäß einer Ausführungsform kann das Beobachtungssystem einen zweiten Beobachtungsstrahlengang zur optischen Abbildung der Objektebene umfassen, wobei in dem zweiten Beobachtungsstrahlengang ein zweiter Beobachtungsfilterträger angeordnet ist, der wenigstens einen weiteren Beobachtungsfilter trägt und zwischen wenigstens einem ersten und einem zweiten Betriebszustand umschaltbar ist, und wobei die Steuerung konfiguriert ist, um wahlweise sowohl das Beleuchtungssystem als auch den zweiten Beobachtungsfilterträger in den ersten Betriebszustand zu schalten oder sowohl das Beleuchtungssystem als auch den zweiten Beobachtungsfilterträger in den zweiten Betriebszustand zu schalten. Folglich kann das Mikroskopiesystem gemäß dieser Ausführungsform als Stereomikroskop ausgebildet sein. Dabei können die Spektren der in dem ersten und zweiten Beobachtungsstrahlengang geführten Beobachtungsstrahlung wahlweise gleich oder verschieden sein.

Gemäß einer Ausführungsform ist wenigstens ein Filterträger zwischen einem ersten Betriebszustand, in dem ein von dem Filterträger getragener erster Filter in dem zweiten Beobachtungsstrahlengang angeordnet ist, und wenigstens einem zweiten Betriebszustand, in dem der von dem Filterträger getragene erste Filter außerhalb des zweiten Beobachtungsstrahlengangs angeordnet ist, umschaltbar.

Dabei kann wenigstens ein Filterträger ein um eine Schwenkachse drehbar gelagertes Tragelement aufweisen, und kann ein Antrieb zum Drehen des Tragelements vorgesehen sein, und kann der von dem Filterträger getragene wenigstens eine Filter von der Schwenkachse beabstandet auf dem Tragelement angeordnet sein. Somit kann der Filterträger als Filterrad ausgebildet sein.

Alternativ oder zusätzlich kann wenigstens ein Filterträger ein linear bewegbares Tragelement aufweisen und kann ein Antrieb zum Bewegen des Tragelements vorgesehen sein, und kann der wenigstens eine Filter auf dem Tragelement angeordnet sein. Somit kann der Filterträger als Schiebefilter ausgebildet sein.

Alternativ oder zusätzlich kann wenigstens ein Filterträger einen Filter tragen, welcher Filter in einem ersten Betriebszustand des Filterträgers eine erste Filtercharakteristik aufweist, und welcher Filter in einem zweiten Betriebszustand des Filterträgers eine zweite Filtercharakteristik aufweist, die von der ersten Filtercharakteristik verschieden ist. Somit kann der Filterträger einen umschaltbaren Filter (wie beispielsweise ein elektronisch schaltbares LC-Filter) tragen.

Zusätzlich oder alternativ kann wenigstens ein Filterträger einen ersten Betriebszustand aufweisen, in dem ein von dem Filterträger getragener Filter mit einem Kernstrahl des jeweils zugehörigen Strahlengangs (d.h. einem Strahl höchster Intensität des Strahlengangs) einen ersten Neigungswinkel einschließt, sowie einen zweiten Betriebszustand aufweisen, in dem der Filter mit dem Kernstrahl einen zweiten, von dem ersten Neigungswinkel verschiedenen Neigungswinkel einschließt, wobei der Filter für in dem zugehörigen Strahlengang geführte Strahlung für die wenigstens zwei verschiedenen Neigungswinkel wenigstens zwei verschiedene Filtercharakteristika aufweist, und ein Antrieb zum Kippen des Filters vorgesehen ist.

Dabei werden im Rahmen dieser Anmeldung Filtercharakteristika dann als verschieden angesehen, wenn jeweils wenigstens eine ansteigende oder abfallende Filterkante der jeweiligen Filter (bezogen auf diejenigen Wellenlängen, bei denen 50% der Strahlung hindurchgelassen werden) um wenigstens 20 nm und bevorzugt um wenigstens 60 nm und besonders bevorzugt um wenigstens 180 nm verschoben ist.

Gemäß einer Ausführungsform trägt jeweils der Beleuchtungsfilterträger mindestens zwei Beleuchtungsfilter mit verschiedenen Filtercharakteristika, und der erste und/oder zweite Beobachtungsfilterträger mindestens zwei Beobachtungsfilter mit verschiedenen Filtercharakteristika. Gemäß einer Ausführungsform umfaßt dabei eine jeweilige Filtercharakteristik jeweils das Anregungsband bzw. Fluoreszenzband eines zu beobachtenden Fluoreszenzfarbstoffes und schließt gleichzeitig das Anregungsband bzw. Fluoreszenzband eines anderen Fluoreszenzfarbstoffes teilweise aus.

Der wenigstens eine Beleuchtungsfilter und/oder der wenigstens eine Beobachtungsfilter und/oder der Infrarot-Sperrfilter können beispielsweise jeweils ein Transmissionsfilter oder ein Reflexionsfilter sein. Dabei können beispielsweise auch volumenreflektierende Hologramme oder wellenlängenabhängige Strahlteiler als Filter verwendet werden.

Gemäß einer weiteren Ausführungsform weist das Mikroskopiesystem ferner eine Anregungsstrahlenquelle zur Beleuchtung der Objektebene mit Anregungsstrahlung auf, wobei die Bandbreite eines Spektrums der Anregungsstrahlung kleiner als 300 nm und bevorzugt kleiner als 200 nm ist und das Anregungsband eines zu beobachtenden Fluoreszenzfarbstoffes im wesentlichen umfaßt, und wobei die Anregungsstrahlenquelle einen ersten Betriebszustand aufweist, in dem Anregungsstrahlung emittiert wird, und einen zweiten Betriebszustand aufweist, in dem keine Anregungsstrahlung emittiert wird, und wobei die Steuerung konfiguriert ist, um wahlweise sowohl die Anregungsstrahlenquelle als auch das Beobachtungssystem in den ersten Betriebszustand zu schalten oder sowohl die Anregungsstrahlenquelle als auch das Beobachtungssystem in den zweiten Betriebszustand zu schalten. In der Folge kann eine Anpassung des Betriebszustandes des Beleuchtungssystems durch An- bzw. Abschalten der Anregungsstrahlenquelle erfolgen. Alternativ kann die Anregungsstrahlenquelle auch zusätzlich zum Beleuchtungssystem vorgesehen sein oder dieses ersetzen. Dabei soll unter einem Spektrum, welches ein Band im wesentlichen umfasst, verstanden werden, dass nach einer Normierung von sowohl Spektrum als auch Band mehr als 50% und vorzugsweise mehr als 70 % und besonders bevorzugt mehr als 90% der Fläche des Bandes von dem Spektrum überlappt werden.

Gemäß einer weiteren Ausführungsform umfaßt das Beleuchtungssystem weiter eine Kalibriereinrichtung, welche Kalibriereinrichtung die von der Kamera erzeugten Bilddaten erhält und einen ersten Betriebszustand aufweist, in dem sie die Bilddaten farbkalibriert, und einen zweiten Betriebszustand aufweist, in dem sie die Bilddaten unverändert läßt, wobei die Steuerung konfiguriert ist, um wahlweise sowohl das Beleuchtungssystem als auch das Beobachtungssystem und die Kalibriereinrichtung in den ersten Betriebszustand zu schalten oder sowohl das Beleuchtungssystem als auch das Beobachtungssystem und die Kalibriereinrichtung in den zweiten Betriebszustand zu schalten. Folglich kann ein in den Bilddaten vorhandener Farbfehler elektronisch korrigiert werden.

Gemäß einer weiteren Ausführungsform weist das Mikroskopiesystem weiter eine mit der Steuerung verbundene Kommunikationsschnittstelle, auf, welche Kommunikationsschnittstelle eine Eingabe eines jeweils gewünschten Fluoreszenzfarbstoffs ermöglicht, und steuert die Steuerung die Betriebszustände der Filterträger und/oder der Anregungsstrahlenquelle und/oder der Kalibriereinrichtung in Abhängigkeit von einem jeweils über die Kommunikationsschnittstelle angegebenen Fluoreszenzfarbstoff gemäß einer vorgegebenen Abhängigkeit. Diese vorgegebenen Abhängigkeit kann beispielsweise in einer Datenbank der Steuerung gespeichert sein.

Eine bevorzugte Ausführungsform der Erfindung wird nachfolgend anhand von Zeichnungen näher erläutert. Hierbei zeigt
- Figur 1: eine schematische Darstellung von Strahlengängen in einem Mikroskopiesystem gemäß einer Ausführungsform der vorliegenden Erfindung;
- Figuren 2A 2B und 2C: schematische Darstellungen von unterschiedlichen Ausführungsformen von Filterträgern, die in dem Mikroskopiesystem gemäß Figur 1 verwendbar sind; und
- Figuren 3A 3B und 3C: Transmissionscharakteristika von Filtern, die von den Filterträgern gemäß den Figuren 2A, 2B und 2C getragen werden.

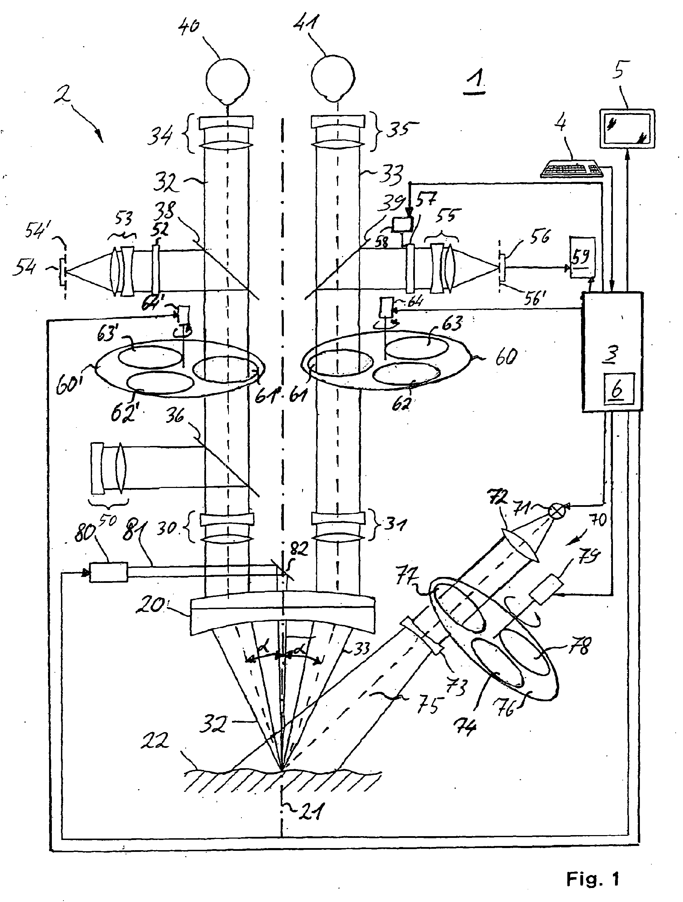

Ein in Figur 1 schematisch dargestelltes Mikroskopiesystem 1 umfaßt eine Mikroskopieoptik 2 mit einem Objektiv 20 mit einer optischen Achse (Hauptachse) 21. In einer Objektebene des Objektivs 20 ist ein zu untersuchendes Objekt 22 angeordnet. Von dem Objekt 22 ausgehendes Licht wird von dem Objektiv 20 in ein paralleles Strahlenbündel überführt, in welchem zwei mit Abstand von der optischen Achse 21 angeordnete Zoomsysteme 30, 31 angeordnet sind und aus dem parallelen Strahlenbündel jeweils ein Teilstrahlenbündel herausgreifen und so erste und zweite Beobachtungsstrahlengänge 33 und 32 bilden. Die Teilstrahlenbündel der ersten und zweiten Beobachtungsstrahlengänge 33 und 32 werden über in Figur 1 nicht dargestellte Umlenkprismen Okularen 34 und 35 zugeführt, in welche ein Betrachter mit seinem linken Auge 40 bzw. rechten Auge 41 Einblick nimmt, um eine vergrößerte Darstellung des Objekts 22 als Bild wahrzunehmen. Hierbei entspricht das mit dem linken Auge 40 wahrgenommene Bild einem Bild bei Betrachtung unter einem Winkel α zur optischen Achse, und das von dem rechten Auge 41 wahrgenommene Bild entspricht einem Bild bei Betrachtung des Objekts 22 unter einem Winkel -α zur optischen Achse 21, so daß der Betrachter mit seinen beiden Augen 40, 41 insgesamt ein stereoskopisches Bild des Objekts 22 erhält.

In dem zweiten Beobachtungsstrahlengang 32 ist ein teildurchlässiger Spiegel 36 angeordnet, um einen Teil des Lichts als Strahl auszukoppeln. Der so ausgekoppelte Strahl wird einem Okular 50 zugeführt, über welches ein Nebenbeobachter eine vergrößerte Darstellung des Objekts 22 als Bild wahrnehmen kann. Alternativ kann der Strahl auch einer Kamera etc. zugeführt werden.

In dem ersten und zweiten Beobachtungsstrahlengang 33, 32 zur optischen Abbildung des Objekts 22 des in Figur 1 dargestellten Mikroskopiesystems 1 ist jeweils ein erster bzw. zweiter Beobachtungsfilterträger 60, 60' angeordnet. In Figur 1 sind der erste und zweite Beobachtungsfilterträger 60, 60' jeweils drehbar gelagerte Aluminiumscheiben, welche jeweils zwei unterschiedliche Transmissionsfilter 61, 62 bzw. 61', 62' tragen, sowie jeweils eine Öffnung 63 bzw. 63' aufweisen. Statt aus Aluminium können die Beobachtungsfilterträger 60, 60' alternativ beispielsweise aus Hartplastik oder einem anderen geeigneten Werkstoff gebildet sein.

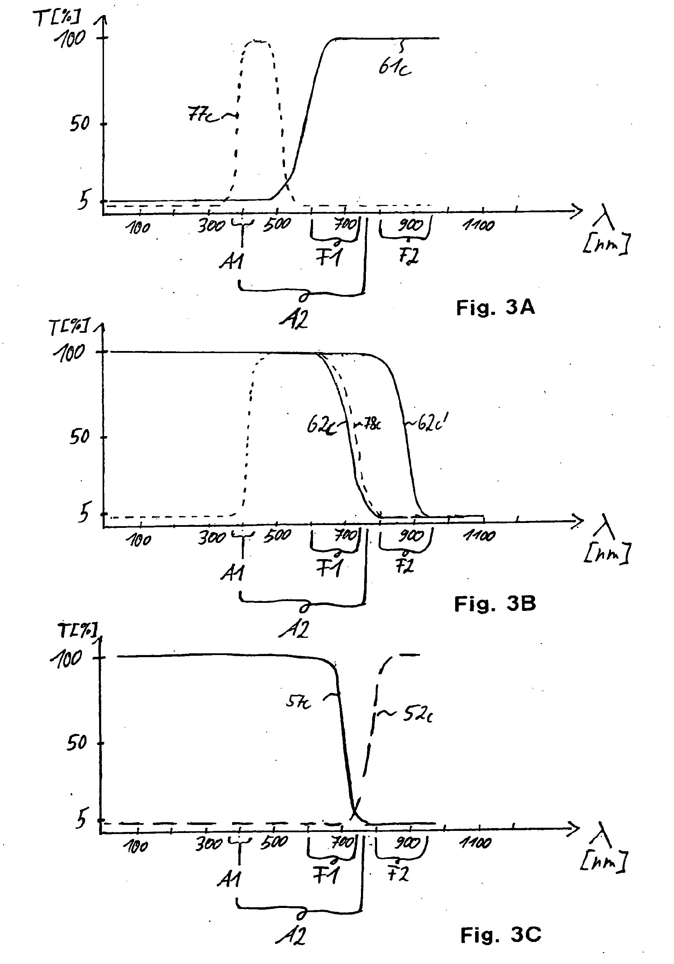

Dabei sind die Transmissionsfilter 61 und 61' hinsichtlich ihrer jeweiligen Filtercharakteristik (Transmissionscharakteristik) identisch und die Transmissionsfilter 62 und 62' hinsichtlich ihrer jeweiligen Filtercharakteristik verschieden. In der gezeigten Ausführungsform weisen die Filter 61 und 61' die in Figur 3A in durchgezogener Linie gezeigte Filtercharakteristik 61c, der Filter 62 die in Figur 3B in durchgezogener Linie gezeigte Filtercharakteristik 62c und der Filter 62' die in Figur 3B in durchgezogener Linie gezeigte Filtercharakteristik 62c' auf. Die Filtercharakteristik 61c der Filter 61, 61' zeigt eine Schwelle bei etwa 620 nm, unterhalb welcher die Filter 61, 61' im wesentlichen nicht transparent und oberhalb welcher die Filter 61, 61' im wesentlichen transparent sind. Die Filtercharakteristik 62c bzw. 62c' der Filter 62, 62' zeigt eine Schwelle bei etwa 700 nm bzw. 900 nm, unterhalb welcher die Filter 62, 62' im wesentlichen transparent und oberhalb welcher die Filter 62, 62' im wesentlichen nicht transparent sind.

In den Figuren 3A, 3B und 3C sind zudem das Fluoreszenzband F1 und das Anregungsband A1 des Fluoreszenzfarbstoffs Protoporphyrin IX sowie das Fluoreszenzband F2 und das Anregungsband A2 des Fluoreszenzfarbstoffs ICG (Indocyaningrün) angegeben.

Mittels zweier Antriebe 64 und 64', die jeweils mit einer Steuerung 3 verbunden sind und durch diese gesteuert werden, können die ersten und zweiten Beobachtungsfilterträger 60, 60' jeweils wahlweise in einen ersten Betriebszustand, in dem die Filter 61, 61', in einen zweiten Betriebszustand, in dem die Filter 62, 62', und in einen dritten Betriebszustand, in dem die Öffnungen 63, 63' jeweils in dem ersten bzw. zweiten Beobachtungsstrahlengang 33, 32 angeordnet sind, geschaltet werden. Somit kann die Steuerung 3 die ersten und zweiten Beobachtungsfilterträger 60, 60' mittels der Antriebe 64 und 64' wahlweise so steuern, daß in dem ersten Beobachtungsstrahlengang 33 ein Filter mit einer gleichen oder aber mit einer unterschiedlichen Filtercharakteristik als in dem zweiten Beobachtungsstrahlengang 32 angeordnet ist.

Beispielsweise kann bei einer Anregung von in das Objekt 22 eingebrachtem ICG im ersten Beobachtungsstrahlengang 33 der Filter 62 angeordnet werden, um eine Beobachtung des Objektes 22 unter Anregungsstrahlung (in der Regel Weißlicht) bei gleichzeitiger Sperrung von Nahbereichs-Infrarotstrahlung zu ermöglichen. Aufgrund der Sperrung von Nahbereichs-Infrarotstrahlung oberhalb 700 nm ist das Spektrum im ersten Beobachtungsstrahlengang 33 im Abschnitt hinter dem Filter 62 teilweise frei von dem Fluoreszenzband von Protoporphyrin IX. Dabei wird unter einem Spektrum, das teilweise frei von einem Band ist, verstanden, daß nach einer Normierung von sowohl Spektrum als auch Band weniger als 40% und vorzugsweise weniger als 20% und besonders bevorzugt weniger als 10% der Fläche des Bandes von dem Spektrum überlappt werden. Gleichzeitig kann im zweiten Beobachtungsstrahlengang 32 beispielsweise die Öffnung 63 für eine gleichzeitige Beobachtung des Objektes 22 unter Anregungsstrahlung und der Fluoreszenz des in das Objekt 22 eingebrachten Farbstoffes ICG angeordnet werden.

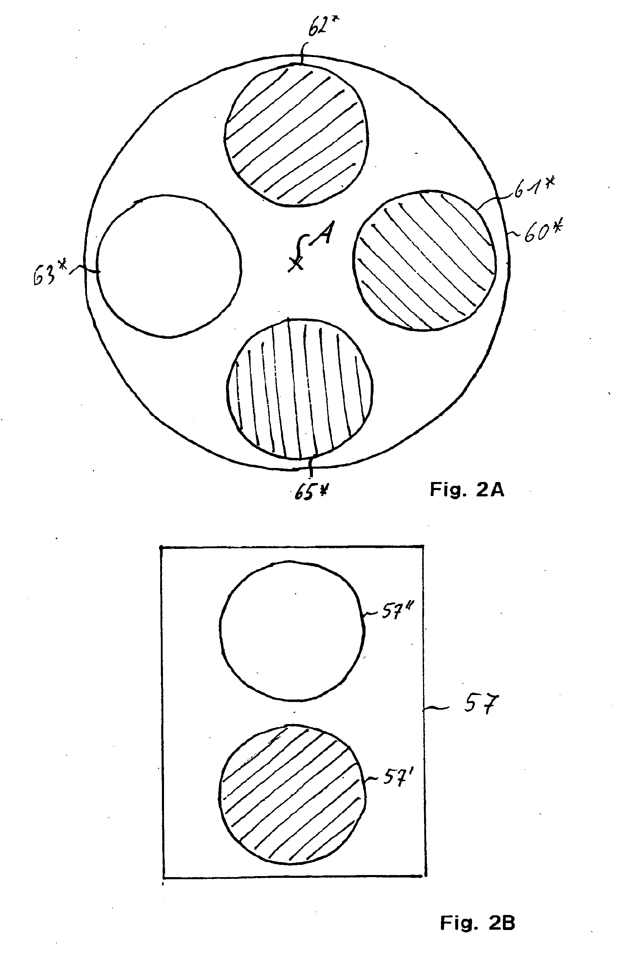

Dabei ist die vorliegende Erfindung nicht auf die vorstehenden Beobachtungsfilterträger und Beobachtungsfilter beschränkt. Vielmehr können die Beobachtungsfilterträger jeweils eine beliebige Anzahl von Filtern mit verschiedenen Filtercharakteristika tragen. Figur 2A zeigt schematisch eine Aufsicht auf einen alternativ verwendbaren Beobachtungsfilterträger 60*, der drei Beobachtungsfilter 61*, 62*, 65* mit verschiedenen Filtercharakteristika sowie eine Öffnung 63* aufweist. Dabei werden im Rahmen dieser Anmeldung Filtercharakteristika dann als verschieden angesehen, wenn jeweils wenigstens eine ansteigende oder abfallende Filterkante der jeweiligen Filter (bezogen auf diejenige Wellenlänge, bei der genau 50% der Strahlung hindurchgelassen wird) um wenigstens 20 nm und bevorzugt um wenigstens 60 nm und besonders bevorzugt um wenigstens 180 nm verschoben ist.

Aus dem ersten Beobachtungsstrahlengang 33 koppelt ein weiterer teildurchlässiger Spiegel 39 einen weiteren Strahl aus, welcher durch eine Kameraadapteroptik 55 auf eine lichtempfindliche Fläche 56' einer CCD-Kamera 56 derart überführt wird, daß diese Bilder des Objekts 22 bei Betrachtung unter dem Winkel -α zur optische Achse 21 aufnehmen kann. Dabei weist die CCD-Kamera 56 kein fest eingebautes Infrarot-Sperrfilter auf.

Vielmehr ist in dem Strahl zwischen dem teildurchlässigen Spiegel 39 und der Kameraoptik 55 ferner ein Infrarotfilterträger 57 angeordnet, der in Figur 2B schematisch in Aufsicht dargestellt ist. Dabei weist der Infrarotfilterträger 57 in der in Figur 2B gezeigten Ausführungsform einen durch einen Antrieb 58 senkrecht zum Strahl zwischen zwei Betriebszuständen linear verlagerbaren Metallträger auf, welcher einen Infrarot-Sperrfilter 57' trägt. Weiter weist der Metallträger eine Öffnung 57'' auf. Der Infrarot-Sperrfilter 57' ist ein für Nahbereichs-Infrarotstrahlung mit einer Wellenlänge größer 700 nm im wesentlichen undurchlässiger Reflexionsfilter mit der in Figur 3C schematisch gezeigten Filtercharakteristik 57c.

In einem ersten Betriebszustand des Infrarotfilterträgers 57 ist der Infrarot-Sperrfilter 57' in dem Strahl zwischen dem teildurchlässigen Spiegel 39 und der Kameraoptik 55 angeordnet, und in einem zweiten Betriebszustand ist die Öffnung 57'' in dem Strahl angeordnet und dieser somit frei von dem Infrarot-Sperrfilter 57'. Somit ist das Spektrum im ersten Beobachtungsstrahlengang 33 im ersten Betriebszustand im Abschnitt zwischen dem Infrarot-Sperrfilter 57' und der CCD-Kamera 56 teilweise frei von dem Fluoreszenzband von Protoporphyrin IX.

Der Antrieb 58 ist mit der Steuerung 3 verbunden, welche über den Antrieb 58 einen jeweiligen Betriebszustand des Infrarotfilterträgers 57 steuert.

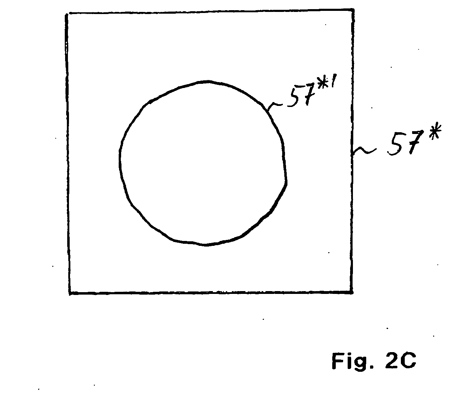

Alternativ zu dem vorstehend beschriebenen, mittels des Antriebs 58 linear verlagerbaren Infrarotfilterträgers 57 kann auch ein in Figur 2C schematisch gezeigter Infrarotfilterträger 57* verwendet werden, welcher einen über die Steuerung 3 elektrisch schaltbaren LC-Filter 57*' trägt, der in einem ersten Betriebszustand des Filterträgers 57* für Nahbereichs-Infrarotstrahlung mit einer Wellenlänge größer 700 nm und in einem zweiten Betriebszustand für Nahbereichs-Infrarotstrahlung mit einer Wellenlänge größer 730 nm undurchlässig ist.

Weiter alternativ zu dem vorstehend beschriebenen, mittels des Antriebs 58 linear verlagerbaren Infrarotfilterträgers 57, kann auch ein einen Filter tragender Filterträger ähnlich dem in Figur 2C gezeigten verwendet werden, der einen ersten Betriebszustand aufweist, in dem ein von dem Filterträger getragener Filter mit einem Kernstrahl des jeweils zugehörigen Strahlengangs einen ersten Neigungswinkel einschließt, sowie einen zweiten Betriebszustand aufweist, in dem der Filter mit dem Kernstrahl einen zweiten, von dem ersten Neigungswinkel verschiedenen Neigungswinkel einschließt. Dabei weist der Filter für in dem zugehörigen Strahlengang geführte Strahlung für die wenigstens zwei verschiedenen Neigungswinkel wenigstens zwei verschiedene Filtercharakteristika auf, und ist ein Antrieb zum Kippen des Filters vorgesehen. Anders als bei dem in Figur 2C gezeigten Filter wird die Filtercharakteristik somit nicht direkt durch elektrisches Umschalten des Filters sondern indirekt durch Änderung des Winkels der ihn durchlaufenden Strahlung umgeschaltet. Ein derartiger Filter kann beispielsweise durch ein volumenreflektierendes Hologramm realisiert sein.

Auch wenn der Infrarotfilterträger 57 in der in Figur 1 gezeigten Ausführungsform direkt vor der Kameraoptik 55 und damit vor der CCD-Kamera 56 angeordnet ist, kann der Infrarotfilterträger alternativ an einem beliebigen Ort zwischen dem Objekt 22 und dem teildurchlässigen Spiegel 39 in dem zugehörigen ersten Beobachtungsstrahlengang 33 angeordnet sein. So kann der zwischen wenigstens zwei Betriebszuständen umschaltbare Infrarotfilterträger beispielsweise in den teildurchlässigen Spiegel 39 oder die CCD-Kamera 56 oder den ersten Beobachtungsfilterträger 60 integriert sein.

Die von der CCD-Kamera 56 aufgenommenen Bilder werden als Bilddaten über eine Datenleitung an eine Auswerteeinheit (nicht gezeigt) übermittelt.

Gemäß der in Figur 1 gezeigten Ausführungsform werden die von der CCD-Kamera 56 aufgenommenen Bilder als Bilddaten über eine zusätzliche Datenleitung an eine Kalibriereinrichtung 59 übermittelt, um Farbfehler zu korrigieren. Die Kalibriereinrichtung 59 ist mit der Steuerung 3 verbunden und weist einen ersten Betriebszustand auf, in dem sie die Bilddaten zur Korrektur des (beispielsweise durch Infrarotstrahlung hervorgerufenen) Farbfehlers elektronisch farbkalibriert, und die so korrigierten Bilddaten an die Auswerteeinheit übermittelt. Weiter weist die Kalibriereinrichtung 59 einen zweiten Betriebszustand auf, in dem sie die Bilddaten unverändert an die Auswerteeinheit übermittelt. Die beiden Betriebszustände der Kalibriereinrichtung werden durch die Steuerung kontrolliert, wie noch beschrieben werden wird. Bei Vorsehen einer entsprechenden Kalibriereinrichtung kann auf den separaten Infrarotfilterträger wahlweise auch verzichtet werden.

Weiter alternativ ist dem Fachmann zur Korrektur von durch Infrarotstrahlung hervorgerufenen Farbfehlern in von einer Kamera erstellten Bilddaten auch ein zyklisches Betreiben einer die Infrarotstrahlung hervorrufenden Beleuchtungsquelle und gegenzyklisches Auslesen der Kamera sowie die Verwendung einer 3-Chip Kamera mit einem Farbteiler, welcher Infrarotanteile zur Vermeidung eines durch die Infrarotstrahlung hervorgerufenen Farbfehlers vollständig auf einen Rotkanal der Kamera leitet, bekannt. Zudem sind dem Fachmann Kameras mit einem RR'GB-Bayer-Filter bekannt, wobei der R-Teil des RR'GB-Bayer-Filters beispielsweise nur Strahlung mit einer Wellenlänge von unter 700 nm und der R'-Teil des RR'GB-Bayer-Filters beispielsweise nur Strahlung mit einer Wellenlänge von zwischen 700 nm und 730 nm oder beispielsweise nur Strahlung mit einer Wellenlänge bis 730 nm hindurchläßt. Ein derartiger RR'GB-Bayer-Filter erlaubt ein separates Auslesen eines in einer einfallenden Strahlung enthaltenen Infrarotanteils.

Bei Anwendung der vorstehend genannten alternativen Ansätze zur Korrektur von insbesondere durch Infrarotstrahlung hervorgerufenen Farbfehlern in von einer Kamera erstellten Bilddaten kann auf das Vorsehen des vorstehend beschriebenen separaten Infrarot-Sperrfilters 57', 57*' vor der CCD-Kamera 56 wahlweise verzichtet werden. Weiter kann auf das Vorsehen des vorstehend beschriebenen Infrarot-Sperrfilters 57', 57*' vor der CCD-Kamera 56 wahlweise verzichtet werden, wenn der von dem ersten Beobachtungsfilterträger 60 getragene Filter 62 mit der Filtercharakteristik 62c im ersten Beobachtungsstrahlengang 33 angeordnet ist.

Aus dem zweiten Beobachtungsstrahlengang 32 koppelt ein weiterer teildurchlässiger Spiegel 38 einen weiteren Strahl aus, welcher durch eine Kameraadapteroptik 53 auf eine lichtempfindliche Fläche 54' einer Infrarotkamera 54 derart überführt wird, daß diese Infrarotbilder des Objekts 22 bei Betrachtung unter dem Winkel α zur optische Achse 21 aufnehmen kann. Hierfür ist in dem Strahl zwischen dem teildurchlässigen Spiegel 38 und der Kameraoptik 53 ferner ein Infrarotfilter 52 angeordnet. Der Infrarotfilter 52 ist ein für Nahbereichs-Infrarotstrahlung mit einer Wellenlänge größer 800 nm im wesentlichen durchlässiger Reflexionsfilter mit der in Figur 3C schematisch gestrichelt gezeigten Filtercharakteristik 52c. Die Filtercharakteristik 52c zeigt eine Schwelle bei etwa 800 nm, oberhalb welcher der Filter 52 im wesentlichen transparent und unterhalb welcher der Filter 52 im wesentlichen nicht transparent ist. Die von der Infrarotkamera 54 aufgenommenen Infrarotbilder werden als Bilddaten über eine Datenleitung an die Auswerteeinheit übermittelt.

Alternativ zu dem Filter 52 mit der in Figur 3C gezeigten Filtercharakteristik 52c, der bei entsprechenden Betriebszuständen der jeweiligen Filterträger mit dem Filter 62' mit der Filtercharakteristik 62c' zusammenwirken kann, kann der Filter 52 auch als Bandpass mit einem Durchlassbereich von ca. 800 nm bis 900 nm ausgebildet sein. Der Filter 62' kann dann entfallen.

Die Auswerteeinheit überträgt die von den Kameras 54 und 56 aufgenommenen Bilder als Bilddaten über eine nicht gezeigte Leitung an einen Monitor 5. Hierfür überträgt die Auswerteeinheit die von der Infrarotkamera 54 erstellten Bilddaten zunächst in den sichtbaren Bereich.

Das in Figur 1 gezeigte Mikroskopiesystem 1 weist weiter ein Beleuchtungssystem 70 auf, welches eine Xenonlampe 71, eine Beleuchtungsoptik 72, 73 sowie einen Beleuchtungsfilterträger 76 umfaßt. Anstatt der Xenonlampe 71 kann auch jegliche andere Art von Lampe eingesetzt werden, beispielsweise eine Halogenlampe.

In der Darstellung der Figur 1 ist die Beleuchtungsoptik 72, 73 zwar relativ dicht an dem Objektiv 20 angeordnet, gleichwohl verläuft eine Hauptachse eines von der Beleuchtungsoptik 72, 73 bereitgestellten Beleuchtungsstrahlengangs 75 in der Darstellung unter einem relativ großen Winkel zur optischen Achse 21 des Objektivs 20 auf das Objekt 22 zu. Ein solcher relativ großer Winkel zwischen der Hauptachse des Beleuchtungsstrahlengangs 75 und der optischen Achse 21 des Objektivs kann dazu führen, daß bei einer Untersuchung von z.B. einem Gewebe (entspricht dem Objekt 22) an einem Boden einer tiefen Ausnehmung in dem Gewebe dieser Boden nicht ausreichend ausgeleuchtet ist und damit das interessierende Gebiet des Objekts 22 nicht zufriedenstellend sichtbar ist. Für solche Anwendungen ist dann bevorzugt eine Anordnung eines Beleuchtungssystems 70 gewählt, bei welcher die Hauptachse des Beleuchtungsstrahlengangs 75 unter einem kleineren Winkel zur optischen Achse 21 auf das Objekt zu verläuft (beispielsweise indem der Lichtstrahl Linsen des Objektivs durchsetzt oder in Linsen des Objektivs Ausnehmungen vorgesehen sind, welche von dem Beleuchtungslichtstrahl durchsetzt sind).

Der Beleuchtungsfilterträger 76 des Beleuchtungssystems 70 ist in dem Beleuchtungsstrahlengang 75 angeordnet. In der gezeigten Ausführungsform ist der Beleuchtungsfilterträger 76 eine drehbar gelagerte Kreisscheibe und trägt einen ersten Beleuchtungsfilter 77, der für das Anregungsband A1 des Fluoreszenzfarbstoffes Protoporphyrin IX durchlässig und gleichzeitig für das Anregungsband A2 des Fluoreszenzfarbstoffes ICG im wesentlichen undurchlässig ist. Die entsprechende Filtercharakteristik 77c ist in Figur 3A gestrichelt gezeigt.

Dabei wird unter einem Filter, der für ein Band im wesentlichen durchlässig ist, verstanden, dass der Filter Strahlung in einem Wellenlängenbereich, der wenigstens 50% und vorzugsweise wenigstens 70% und besonders bevorzugt wenigstens 90% der Breite des Bandes umfasst, zu mehr als 50% und bevorzugt zu mehr als 70% und besonders bevorzugt zu mehr als 90% (bezogen auf die Intensität der Strahlung) hindurchlässt. Entsprechend wird unter einem Filter, der für ein Band im wesentlichen / teilweise undurchlässig ist, verstanden, dass der Filter Strahlung in einem Wellenlängenbereich, der höchstens 40% und vorzugsweise höchstens 20% und besonders bevorzugt höchstens 10% der Breite des Bandes umfasst, zu mehr als 50% (bezogen auf die Intensität der Strahlung) hindurchlässt.

Weiter trägt der Beleuchtungsfilterträger 76 einen zweiten Beleuchtungsfilter 78, der die in Figur 3B gestrichelt gezeigte Filtercharakteristik 78c aufweist. Der zweite Beleuchtungsfilter 78 ist somit für Strahlung zwischen 400 nm und 780 nm und damit für Strahlung der Anregungsbänder A1, A2 (und allgemein für Weißlicht) durchlässig, und weist für Strahlung mit einer Wellenlänge von größer als 780 nm eine Transmissionsrate von unter 5% auf.

Zudem trägt der Beleuchtungsfilterträger 76 einen für Infrarotstrahlung oberhalb von 700 nm undurchlässigen Infrarot-Sperrfilter 74, der dazu dient, eine übermäßige Erhitzung des Objektes 22 bei Bestrahlung mit Weißlicht durch die Xenonlampe 71 zu verhindern. Gemäß einer nicht eigens gezeigten alternativen Ausführungsform kann der Infrarot-Sperrfilter 74 auch separat zu dem Beleuchtungsfilterträger 76 in dem Beleuchtungsstrahlengang 75 angeordnet sein und wahlweise (vergleichbar dem Infrarotfilterträger 57) mehrere durch die Steuerung 3 gesteuerte Betriebszustände aufweisen. Die Filtercharakteristik des Infrarot-Sperrfilter 74 ist der in Figur 3C gezeigten Filtercharakteristik 57c vergleichbar, kann jedoch auch von dieser verschieden sein.

Es ist offensichtlich, dass der Beleuchtungsfilterträger 76 auch mehr oder weniger als drei Beleuchtungsfilter tragen kann. Weiter kann der Beleuchtungsfilter 76 alternativ zusätzlich auch eine Öffnung aufweisen, um ungefilterte Beleuchtungsstrahlung hindurchzülassen.

Über einen Antrieb 79, der mit der Steuerung 3 verbunden ist, ist der Beleuchtungsfilterträger 76 zwischen einem ersten Betriebszustand, in dem der von dem Beleuchtungsfilterträger 76 getragene erste Beleuchtungsfilter 77 in dem Beleuchtungsstrahlengang 75 angeordnet ist, einem zweiten Betriebszustand, in dem der zweite Beleuchtungsfilter 78 des Beleuchtungsfilterträgers 76 in dem Beleuchtungsstrahlengang 75 angeordnet ist, und einem dritten Betriebszustand, in dem der Infrarot-Sperrfilter 74 in dem Beleuchtungsstrahlengang 75 angeordnet ist, umschaltbar.

Folglich weist zu dem Objekt 22 geführte Beleuchtungsstrahlung des Beleuchtungssystems 70 in dem ersten Betriebszustand des Beleuchtungsfilterträgers 76 ein Spektrum auf, welches das Anregungsband A1 des Fluoreszenzfarbstoffes Protoporphyrin IX umfaßt und gleichzeitig teilweise frei von dem Anregungsband A2 des Fluoreszenzfarbstoffes ICG ist. Weiter weist die zu dem Objekt 22 geführte Beleuchtungsstrahlung des Beleuchtungssystems 70 in dem zweiten Betriebszustand des Beleuchtungsfilterträgers 76 ein Spektrum auf, welches das zweite Anregungsband A2 des Fluoreszenzfarbstoffes ICG umfasst und in der gezeigten Ausführungsform bis 780 nm offenem Weißlicht entspricht. Im dritten Betriebszustand erfolgt eine Beleuchtung unter Weißlicht bis 700 nm, wobei Nahbereichs-Infrarotstrahlung zur Vermeidung einer übermäßigen Erwärmung des beobachteten Objektes 22 herausgefiltert wird.

Weiter ist die Xenonlampe 71 mit der Steuerung 3 verbunden und weist einen eingeschalteten und einen ausgeschalteten Betriebszustand auf.

Die vorstehend verwendeten Filter 57', 61, 61', 62, 62', 77 können wahlweise Transmissions- oder Reflexionsfilter sein. Weiter können die vorstehenden Filter wahlweise Bandpaßfilter (siehe Filter 52, 57, 61, 62, 62')oder auch Notch-Filter (siehe Filter 77, 78) sein.

Das in Figur 1 gezeigte Mikroskopiesystem 1 weist weiter eine Diode 80 zur Beleuchtung des Objekts 22 mit Anregungsstrahlung 81 auf. In der gezeigten Ausführungsform wird die Anregungsstrahlung 81 über einen Spiegel 82 entlang der Hauptachse 21 des Objektivs 20 eingespiegelt. Die Bandbreite des Spektrums der von der Diode 80 erzeugten Anregungsstrahlung 81 umfaßt im wesentlichen das Anregungsband A2 des Fluoreszenzfarbstoffes ICG. Dabei soll unter einem Spektrum, welches ein Band im wesentlichen umfasst, verstanden werden, dass nach einer Normierung von sowohl Spektrum als auch Band mehr als 50% und vorzugsweise mehr als 70% und besonders bevorzugt mehr als 90% der Fläche des Bandes von dem Spektrum überlappt werden. Die Diode 80 wird durch die Steuerung 3 gesteuert und weist einen ersten Betriebszustand auf, in dem sie Anregungsstrahlung emittiert, und einen zweiten Betriebszustand auf, in dem sie keine Anregungsstrahlung emittiert.

Die Steuerung 3 des Mikroskopiesystems 1 wird in der gezeigten Ausführungsform durch einen programmtechnisch in geeigneter Weise eingerichteten Mikroprozessor gebildet.

Die Steuerung 3 ist mit einer Tastatur 4 verbunden, welche eine Eingabe eines jeweils gewünschten Fluoreszenzfarbstoffs durch einen Benutzer beispielsweise in Form eines Codes ermöglicht. Weiter ist die Steuerung 3 mit einem Monitor 5 verbunden, um einen jeweiligen Betriebszustand der Steuerung 3 anzuzeigen. Der Monitor 5 wird gleichzeitig von der Auswerteeinheit zum Darstellen von Bilddaten verwendet.

Die Steuerung 3 steuert die jeweiligen Betriebszustände der Filterträger 57, 60, 60', 76, der Xenonlampe 71, der Diode 80 sowie der Kalibriereinrichtung 59 in Abhängigkeit von einem jeweils über die Tastatur 4 angegebenen Fluoreszenzfarbstoff gemäß einer vorgegebenen Abhängigkeit. Diese vorgegebene Abhängigkeit ist in einer Datenbank 6 der Steuerung 3 tabellarisch abgelegt und gibt für eine Vielzahl von Fluoreszenzfarbstoffen die jeweils für eine Beobachtung geeigneten Betriebszustände der Filterträger 57, 60, 60', 76, der Xenonlampe 71, der Diode 80 sowie der Kalibriereinrichtung 59 an. Dabei können für den gleichen Fluoreszenzfarbstoff für unterschiedliche Untersuchungsmethoden auch unterschiedliche Abhängigkeiten gespeichert sein.

Die Arbeitsweise der Steuerung 3 wird im Folgenden anhand von drei Beispielen erläutert. Die Erfindung ist jedoch nicht auf diese Beispiele beschränkt.

### Beispiel 1

Die Steuerung 3 empfängt über die Tastatur einen Code, der angibt, daß gleichzeitig eine Beobachtung des Objektes 22 unter Weißlicht und eine Beobachtung eines ICG Fluoreszenzfarbstoffes durchgeführt werden soll.

Nach Erhalt eines derartigen Codes sucht die Steuerung in der Datenbank 6 nach einer geeigneten Abhängigkeit der Betriebszustände der Elemente (in dem Beispiel: Filterträger 57, 60, 60', 76, Xenonlampe 71, Diode 80 sowie Kalibriereinrichtung 59) des Mikroskopiesystems 1.

Infolge der detektierten Abhängigkeit bewirkt die Steuerung 3 automatisch einen eingeschalteten Betriebszustand der Xenonlampe 71 und steuert den Antrieb 79 des Beleuchtungssystems 70 so, daß der Beleuchtungsfilterträger 76 den Beleuchtungsfilter 78 mit der Filtercharakteristik 78c in dem Beleuchtungsstrahlengang 75 anordnet. In der Folge wird das Objekt 22 im Wesentlichen mit Weißlicht beleuchtet, wobei eine Bestrahlung des Objektes mit UV-Strahlung bzw. Infrarotstrahlung weitgehend vermieden wird.

Gleichzeitig steuert die Steuerung 3 die Antriebe 64 und 64' automatisch so, daß der erste Beobachtungsfilterträger 60 den Beobachtungsfilter 62 mit der Filtercharakteristik 62c und der zweite Beobachtungsfilterträger 60' den Beobachtungsfilter 62' mit der Filtercharakteristik 62c' in dem jeweiligen ersten bzw. zweiten Beobachtungsstrahlengang 33, 32 anordnet. Somit erlauben beide Beobachtungsstrahlengänge 32, 33 und die CCD-Kamera 56 eine Beobachtung des Objektes 22 unter Weißlicht. In dem ersten Beobachtungsstrahlengang 33 findet zudem eine Filterung von Nahbereichs-Infrarotstrahlung statt, um einen Farbfehler in von der CCD-Kamera 56 aufgenommenen Bildern infolge von Infrarotstrahlung zu vermeiden. Der zweite Beobachtungsstrahlengang 32 erlaubt weiter eine Beobachtung der Fluoreszenz von ICG mittels der Infrarotkamera 54.

Alternativ zu der Anordnung des Beobachtungsfilter 62 mit der Filtercharakteristik 62c in dem ersten Beobachtungsstrahlengang 33 kann die Steuerung die Antriebe 58 und 64 in Abhängigkeit von der Datenbank automatisch auch so steuern, daß der Infrarot-Sperrfilter 57' des Infrarotfilterträgers 57 und die Öffnung 63 des ersten Beobachtungsfilterträgers 60 in dem zugehörigen Strahlengang angeordnet ist.

Weiter alternativ kann die Steuerung 3 die Kalibriereinrichtung 59 in Abhängigkeit von der Datenbank automatisch so steuern, daß sie die von der CCD-Kamera 56 erzeugten Bilddaten farbkalibriert, um einen aufgrund der Fluoreszenz des ICG Fluoreszenzfarbstoffes ggf. vorhandenen Farbstich zu korrigieren.

### Beispiel 2

Die Steuerung 3 empfängt über die Tastatur einen Code, der angibt, daß eine Beobachtung eines Protoporphyrin IX Fluoreszenzfarbstoffes unter Anregung durch die Xenonlampe 71 durchgeführt werden soll.

Nach Erhalt eines derartigen Codes sucht die Steuerung in der Datenbank 6 automatisch nach einer Abhängigkeit der Betriebszustände der Elemente des Mikroskopiesystems 1.

Infolge der detektierten Abhängigkeit bewirkt die Steuerung 3 automatisch einen eingeschalteten Betriebszustand der Xenonlampe 71 und steuert den Antrieb 79 des Beleuchtungssystems 70 automatisch so, daß der Beleuchtungsfilterträger 76 den Beleuchtungsfilter 77 mit der Filtercharakteristik 77c in dem Beleuchtungsstrahlengang 75 anordnet. In der Folge wird das Objekt 22 im Wesentlichen nur mit Anregungsstrahlung für Protoporphyrin IX beleuchtet, während das Spektrum des Beleuchtungsstrahlengangs teilweise frei von dem Anregungsband von ICG ist.

Gleichzeitig steuert die Steuerung die Antriebe 64 und 64' automatisch so, daß der erste Beobachtungsfilterträger 60 den Beobachtungsfilter 61 und der zweite Beobachtungsfilterträger 60' den Beobachtungsfilter 61' mit der jeweiligen Filtercharakteristik 61c in dem jeweiligen ersten bzw. zweiten Beobachtungsstrahlengang 33, 32 anordnet. Somit erlauben beide Beobachtungsstrahlengänge 32 und 33 eine Beobachtung der Fluoreszenz. Weiter ist aufgrund der Überlappung zwischen den Filtercharakteristika 77c und 61c gleichzeitig eine stereoskopische Beobachtung des Objektes 22 möglich.

Zusätzlich steuert die Steuerung den Antrieb 58 automatisch so, daß die Öffnung 57'' des Infrarotfilterträgers 57 in dem zugehörigen Strahlengang angeordnet ist. Folglich kann die CCD-Kamera 56 die Fluoreszenz im ganzen Fluoreszenzband F1 des Fluoreszenzfarbstoffes Protoporphyrin IX erfassen. Weiter steuert die Steuerung 3 die Kalibriereinrichtung 59 so, daß sie die von der CCD-Kamera 56 erzeugten Bilddaten nicht hinsichtlich von Nahbereichs-Infrarotstrahlung farbkalibriert, sondern lediglich in den gewonnenen Bildern vorhandene Rotanteile verstärkt. Ein Farbfehler aufgrund von Infrarotstrahlung der Beleuchtungsstrahlung ist nicht möglich, da das Spektrum der Beleuchtungsstrahlung aufgrund der Filtercharakteristik 77c des Beleuchtungsfilters 77 ausreichend vom Infrarotbereich beabstandet ist.

### Beispiel 3

Die Steuerung 3 empfängt über die Tastatur einen Code, der angibt, daß eine Beobachtung eines ICG Fluoreszenzfarbstoffes unter Anregung durch die Diode 80 durchgeführt werden soll.

Nach Erhalt eines derartigen Codes sucht die Steuerung in der Datenbank 6 automatisch nach einer geeigneten Abhängigkeit der Betriebszustände der Elemente des Mikroskopiesystems 1.

Infolge der detektierten Abhängigkeit bewirkt die Steuerung 3 automatisch einen eingeschalteten Betriebszustand der Xenonlampe 71 und zusätzlich einen abwechselnd eingeschalteten bzw. ausgeschalteten Zustand der Diode 80. Weiter steuert die Steuerung 3 den Antrieb 79 des Beleuchtungssystems 70 automatisch so, daß der Beleuchtungsfilterträger 76 den Infrarot-Sperrfilter 74 in dem Beleuchtungsstrahlengang 75 anordnet. In der Folge wird das Objekt 22 abwechselnd entweder nur durch die Xenonlampe 71 mit Weißlicht oder durch die Xenonlampe 71 mit Weißlicht und gleichzeitig durch die Diode 80 mit Anregungsstrahlung für ICG bestrahlt.

Weiter steuert die Steuerung 3 die Antriebe 64 und 64' automatisch so, daß der erste Beobachtungsfilterträger 60, die Öffnung 63 und der zweite Beobachtungsfilterträger 60' den Filter 62' mit der Filtercharakteristik 62c' in dem jeweiligen ersten bzw. zweiten Beobachtungsstrahlengang 33, 32 anordnet. Zudem steuert die Steuerung den Antrieb 58 so, dass der Infrarotfilterträger 57 den Infrarot-Sperrfilter 57' im Strahlengang vor der CCD-Kamera 56 anordnet.

Derweilen liest die Steuerung 3 die Infrarotkamera 54 synchron mit einer Ansteuerung der Diode 80 und die CCD-Kamera 56 permanent aus. Die in den Belichtungspausen der Diode 80 von der CCD-Kamera 56 aufgenommenen Bilder werden durch die Steuerung 3 von in den Belichtungsphasen der Diode 80 durch die Infrarotkamera 54 aufgenommenen Bildern abgezogen. Hierdurch ist eine besonders scharfe Trennung zwischen dem durch die Infrarotkamera 54 gewonnenen Fluoreszenzbild und dem durch die CCD-Kamera 56 gewonnen Bild des Objektes 22 bei gleichzeitiger visueller stereoskopischer Betrachtung des Objektes ermöglicht.

In der gezeigten Ausführungsform erfolgt ein Umschalten der jeweiligen Betriebszustände durch die Steuerung 3 im wesentlichen synchron. Das bedeutet, daß der Abstand zwischen dem Umschalten des Betriebszustandes eines ersten Elements des Mikroskopiesystems bis zu dem Umschalten des Betriebszustandes eines letzten Elements des Mikroskopiesystems weniger als 10 Sekunden und bevorzugt weniger als 5 Sekunden und besonders bevorzugt weniger als 1 Sekunden beträgt.

Alternativ zu der vorstehend beschriebenen elektrischen Steuerung 3 mittels eines Mikroprozessors kann die Steuerung 3 auch analog oder sogar mechanisch (beispielsweise mittels Zahnrädern und/oder Seilzügen) realisiert sein.

Weiter kann alternativ ein Umschalten nicht durch eine Eingabe über die Tastatur 4 initiiert werden, sondern dadurch, daß die Steuerung eine (manuell durch einen Benutzer bewirkte) Änderung eines Betriebszustands von wenigstens einem Element des Mikroskopiesystems 1 automatisch durch geeignete Sensoren detektiert und die Betriebszustände der übrigen Elemente des Mikroskopiesystems 1 gemäß der vorgegebenen Abhängigkeit automatisch entsprechend angepaßt.

Indem die Steuerung die Betriebszustände der Elemente des Beleuchtungssystems und der Elemente des Beobachtungssystems automatisch so umschaltet, daß die Betriebszustände jeweils an einen zu beobachtenden Fluoreszenzfarbstoff angepaßt sind, kann das erfindungsgemäße Mikroskopiesystem besonders einfach und zuverlässig auch unter schwierigen hygienischen Bedingungen sequentiell verschiedene Fluoreszenzfarbstoffe beobachten. Eine fehlerhafte Beobachtung aufgrund mangelnder Abstimmung des Beleuchtungssystem und des Beobachtungssystem wird durch das Vorsehen der Steuerung auf besonders einfache und wirkungsvolle Weise vermieden.

Es wird betont, daß die vorliegende Erfindung nicht auf das in Figur 1 gezeigte Mikroskopiesystem oder die Verwendung der vorstehend beschriebenen Fluoreszenzfarbstoffe beschränkt ist, Zusammengefaßt wird ein Mikroskopiesystem vorgeschlagen, um verschiedene in einem in einer Objektebene angeordnetem Gewebe angereicherte Fluoreszenzfarbstoffe sequentiell zu beobachten. Hierfür weist ein Beleuchtungssystem des Mikroskopiesystems zur Beleuchtung der Objektebene mit Beleuchtungsstrahlung wenigstens zwei verschiedene Betriebszustände auf, wobei in wenigstens einem der beiden Betriebszustände die Beleuchtungsstrahlung ein Spektrum aufweist, welches ein Anregungsband eines ersten Fluoreszenzfarbstoffes umfaßt und gleichzeitig teilweise frei von einem Anregungsband eines anderen Fluoreszenzfarbstoffes ist. Weiter weist auch ein Beobachtungssystem des Mikroskopiesystems zur Bereitstellung eines ersten Beobachtungsstrahlengangs zur optischen Abbildung der Objektebene wenigstens zwei verschiedene Betriebszustände auf, wobei in einem der wenigstens zwei Betriebszustände in dem ersten Beobachtungsstrahlengang geführte Beobachtungsstrahlung zumindest abschnittsweise ein Spektrum aufweist, welches das Fluoreszenzband des ersten Fluoreszenzfarbstoffes umfaßt und in wenigstens einem anderen Betriebszustand in dem ersten Beobachtungsstrahlengang geführte Beobachtungsstrahlung zumindest abschnittsweise teilweise frei von dem Fluoreszenzband des ersten Fluoreszenzfarbstoffes ist. Ferner weist das Mikroskopiesystem eine Steuerung auf, welche konfiguriert ist, um wahlweise sowohl das Beleuchtungssystem als auch das Beobachtungssystem in den ersten Betriebszustand zu schalten oder sowohl das Beleuchtungssystem als auch das Beobachtungssystem in den zweiten Betriebszustand zu schalten.

## Patentansprüche

1. Mikroskopiesystem (1) zur Beobachtung von Fluoreszenzen verschiedener Fluoreszenzfarbstoffe in einer Objektebene (22),
wobei das Mikroskopiesystem (1) ein Beleuchtungssystem (70) zur Beleuchtung der Objektebene (22) mit Beleuchtungsstrahlung sowie ein Beobachtungssystem (2) zur Bereitstellung eines ersten Beobachtungsstrahlengangs (33) zur optischen Abbildung der Objektebene (22) umfasst, wobei das Beobachtungssystem (2) eine Kamera (56) und einen ersten Beobachtungsfilterträger (60) umfasst, wobei der Beobachtungsfilterträger (60) mindestens zwei Beobachtungsfilter (61, 62) mit verschiedenen Filtercharakteristika (61c, 62c) trägt, wobei die jeweilige Filtercharakteristik (61c, 62c) jeweils das Fluoreszenzband eines zu beobachtenden Fluoreszenzfarbstoffes umfasst und gleichzeitig das Fluoreszenzband eines anderen Fluoreszenzfarbstoffes teilweise aus schließt,
wobei das Beleuchtungssystem (70) einen ersten Betriebszustand aufweist, in welchem die Beleuchtungsstrahlung ein Spektrum aufweist, welches ein erstes Anregungsband (A1) eines ersten Fluoreszenzfarbstoffes umfasst und gleichzeitig teilweise frei von einem zweiten Anregungsband (A2) eines von dem ersten Fluoreszenzfarbstoff verschiedenen zweiten Fluoreszenzfarbstoffes ist, und
wobei das Beobachtungssystem (2) einen ersten Betriebszustand aufweist, in welchem ein von dem Beobachtungsfilterträger (60) getragener erster Beobachtungsfilter in dem ersten Beobachtungsstrahlengang (33) angeordnet ist, und in dem ersten Beobachtungsstrahlengang (33) geführte Beobachtungsstrahlung daher abschnittsweise ein Spektrum aufweist, das ein erstes Fluoreszenzband (F1) des ersten Fluoreszenzfarbstoffes umfasst,
wobei das Beleuchtungssystem (70) wenigstens einen zweiten Betriebszustand aufweist, in welchem die Beleuchtungsstrahlung ein Spektrum aufweist, welches das zweite Anregungsband (A2) des zweiten Fluoreszenzfarbstoffes umfasst, und
wobei das Beobachtungssystem (2) wenigstens einen zweiten Betriebszustand aufweist, in welchem ein von dem Beobachtungsfilterträger (60) getragener zweiter Beobachtungsfilter in dem ersten Beobachtungsstrahlengang (33) angeordnet ist, und in dem ersten Beobachtungsstrahlengang (33) geführte Beobachtungsstrahlung daher abschnittsweise ein Spektrum aufweist, welches teilweise frei von dem ersten Fluoreszenzband (F1) des ersten Fluoreszenzfarbstoffes ist,
wobei in wenigstens einem Betriebszustand des Beleuchtungssystems (70) in einem von dem Beleuchtungssystem (70) bereitgestellten Beleuchtungsstrahlengang (75) ein von einem Beleuchtungsfilterträger (76) getragener Beleuchtungsfilter (77) angeordnet ist, der für das Anregungsband (A1, A2) eines zu beobachtenden Fluoreszenzfarbstoffes durchlässig und gleichzeitig für das Anregungsband (A2, A1) eines anderen Fluoreszenzfarbstoffes im wesentlichen undurchlässig ist, und das Beleuchtungssystem (70) eine Lampe umfasst, die ausgebildet ist, Weißlicht zu emittieren,
**dadurch gekennzeichnet, dass**
der erste Fluoreszenzfarbstoff Protoporphyrin IX und der zweite Fluoreszenzfarbstoff Indocyaningrün ist,
das Beobachtungssystem (2) weiter wenigstens einen von einem Infrarotfilterträger (57) getragenen Infrarot-Sperrfilter (57') umfasst, wobei der Infrarotfilterträger (57) zusätzlich zu dem Beobachtungsfilterträger (60) vorgesehen ist und einen ersten Betriebszustand aufweist, in dem der erste Beobachtungsstrahlengang (33) vor der Kamera (56) frei von dem Infrarot-Sperrfilter (57') ist, und einen zweiten Betriebszustand aufweist, in dem der Infrarot-Sperrfilter (57') in dem ersten Beobachtungsstrahlengang (33) vor der Kamera (56) angeordnet ist, und
das Mikroskopiesystem (1) ferner eine Steuerung (3) aufweist, welche konfiguriert ist, um wahlweise sowohl das Beleuchtungssystem (70) als auch das Beobachtungssystem (2) und den Infrarotfilterträger (57) in den ersten Betriebszustand zu schalten oder sowohl das Beleuchtungssystem (70) als auch das Beobachtungssystem (2) und den Infrarotfilterträger (57) in den zweiten Betriebszustand zu schalten.

2. Mikroskopiesystem (1) nach Anspruch 1, wobei in wenigstens einem Betriebszustand des Beobachtungssystems (2) in dem ersten Beobachtungsstrahlengang (33) ein von einem ersten Beobachtungsfilterträger (60) getragener Beobachtungsfilter (62) angeordnet ist, der für das Fluoreszenzband (F1) eines beobachteten Fluoreszenzfarbstoffes durchlässig und gleichzeitig für das Fluoreszenzband (F2) eines anderen Fluoreszenzfarbstoffes im wesentlichen undurchlässig ist.

3. Mikroskopiesystem (1) nach einem der Ansprüche 1 oder2,
wobei das Beobachtungssystem (2) einen zweiten Beobachtungsstrahlengang (32) zur optischen Abbildung der Objektebene (22) umfasst,
wobei in dem zweiten Beobachtungsstrahlengang (32) ein zweiter Beobachtungsfilterträger (60') angeordnet ist, der wenigstens einen weiteren Beobachtungsfilter (61', 62') trägt und zwischen wenigstens einem ersten und einem zweiten Betriebszustand umschaltbar ist, und
wobei die Steuerung (3) konfiguriert ist, um wahlweise sowohl das Beleuchtungssystem (70) als auch den zweiten Beobachtungsfilterträger (60') in den ersten Betriebszustand zu schalten oder sowohl das Beleuchtungssystem (70) als auch den zweiten Beobachtungsfilterträger (60') in den zweiten Betriebszustand zu schalten.

4. Mikroskopiesystem (1) nach Anspruch 3, wobei der zweite Beobachtungsfilterträger (60') im zweiten Betriebszustand einen Filter (62') trägt, der eine Beobachtung der Fluoreszenz des zweiten Fluoreszenzfarbstoffs erlaubt.

5. Mikroskopiesystem (1) nach Anspruch 3 oder 4, wobei wenigstens ein Filterträger (60') zwischen einem ersten Betriebszustand, in dem ein von dem Filterträger (60') getragener erster Filter (61') in dem zweiten Beobachtungsstrahlengang (32) angeordnet ist, und wenigstens einem zweiten Betriebszustand, in dem der von dem Filterträger (60') getragene erste Filter (61') außerhalb des zweiten Beobachtungsstrahlengangs (32) angeordnet ist, umschaltbar ist.

6. Mikroskopiesystem (1) nach einem der Ansprüche 1 bis 5, wobei wenigstens ein Filterträger (60, 60', 76) ein um eine Schwenkachse (A) drehbar gelagertes Tragelement aufweist, und ein Antrieb (64, 64', 79) zum Drehen des Tragelements vorgesehen ist, und der von dem Filterträger (60, 60', 76) getragene wenigstens eine Filter (61, 61', 77) von der Schwenkachse (A) beabstandet auf dem Tragelement angeordnet ist.

7. Mikroskopiesystem (1) nach einem der Ansprüche 1 bis 6, wobei wenigstens ein Filterträger (57) ein linear bewegbares Tragelement aufweist, und ein Antrieb (58) zum Bewegen des Tragelements vorgesehen ist, und der wenigstens eine Filter (57') auf dem Tragelement angeordnet ist.

8. Mikroskopiesystem (1) nach einem Ansprüche 1 bis 7, wobei wenigstens ein Filterträger (57*) einen Filter (57*') trägt, welcher Filter (57*') in einem ersten Betriebszustand des Filterträgers (57*) eine erste Filtercharakteristik aufweist, und welcher Filter (57*') in einem zweiten Betriebszustand des Filterträgers (57*) eine zweite Filtercharakteristik aufweist, die von der ersten Filtercharakteristik verschieden ist.

9. Mikroskopiesystem (1) nach einem der Ansprüche 1 bis 8, wobei wenigstens ein Filterträger einen ersten Betriebszustand aufweist, in dem ein von dem Filterträger getragener Filter mit einem Kernstrahl des jeweils zugehörigen Strahlengang einen ersten Neigungswinkel einschließt, sowie einen zweiten Betriebszustand aufweist, in dem der Filter mit dem Kernstrahl einen zweiten,
von dem ersten Neigungswinkel verschiedenen Neigungswinkel einschließt, wobei der Filter für in dem zugehörigen Strahlengang geführte Strahlung für die wenigstens zwei verschiedenen Neigungswinkel wenigstens zwei verschiedene Filtercharakteristika aufweist, und ein Antrieb zum Kippen des Filters vorgesehen ist.

10. Mikroskopiesystem (1) nach einem der Ansprüche 1bis 7,
wobei der Beleuchtungsfilterträger (76) mindestens zwei Beleuchtungsfilter (77, 78) mit verschiedenen Filtercharakteristika trägt, und
wobei der erste und/oder zweite Beobachtungsfilterträger (60, 60') mindestens zwei Beobachtungsfilter (61, 61', 62, 62') mit verschiedenen Filtercharakteristika trägt.

11. Mikroskopiesystem (1) nach einem der Ansprüche 1 bis 10, wobei der wenigstens eine Beleuchtungsfilter (77) und/oder der wenigstens eine Beobachtungsfilter (61, 61', 62, 62') und/oder der Infrarot-Sperrfilter (57') einen Transmissionsfilter oder einen Reflexionsfilter umfassen.

12. Mikroskopiesystem (1) nach einem der vorangegangenen Ansprüche,
wobei das Mikroskopiesystem (1) ferner eine Anregungsstrahlenquelle (80) zur Beleuchtung der Objektebene (2) mit Anregungsstrahlung aufweist, wobei die Bandbreite eines Spektrums der Anregungsstrahlung kleiner als 200 nm und bevorzugt kleiner als 100 nm ist und das Anregungsband (A2) eines zu beobachtenden Fluoreszenzfarbstoffes im wesentlichen umfasst, und wobei die Anregungsstrahlenquelle (80) einen ersten Betriebszustand aufweist, in dem Anregungsstrahlung emittiert wird, und einen zweiten Betriebszustand aufweist, in dem keine Anregungsstrahlung emittiert wird, und
wobei die Steuerung (3) konfiguriert ist, um wahlweise sowohl die Anregungsstrahlenquelle (80) als auch das Beobachtungssystem (2) in den ersten Betriebszustand zu schalten oder sowohl die Anregungsstrahlenquelle (80) als auch das Beobachtungssystem (2) in den zweiten Betriebszustand zu schalten.

13. Mikroskopiesystem (1) nach einem der vorangegangenen Ansprüche, wobei das Beleuchtungssystem (70) weiter eine in dem ersten oder zweiten Beobachtungsstrahlengang (33, 32) angeordnete erste Kamera (56) zur Erzeugung von Bilddaten, sowie eine Kalibriereinrichtung (59) umfasst, welche Kalibriereinrichtung (59) die von der Kamera (56) erzeugten Bilddaten erhält und einen ersten Betriebszustand aufweist, in dem sie die Bilddaten farbkalibriert, und einen zweiten Betriebszustand aufweist, in dem sie die Bilddaten unverändert lässt, und
wobei die Steuerung (3) konfiguriert ist, um wahlweise sowohl das Beleuchtungssystem (70) als auch das Beobachtungssystem (2) und die Kalibriereinrichtung (59) in den ersten Betriebszustand zu schalten oder sowohl das Beleuchtungssystem (70) als auch das Beobachtungssystem (2) und die Kalibriereinrichtung (59) in den zweiten Betriebszustand zu schalten.

14. Mikroskopiesystem (1) nach einem der Ansprüche 1 bis 13,
wobei das Mikroskopiesystem (1) weiter eine mit der Steuerung (3) verbundene Kommunikationsschnittstelle (4) aufweist, welche Kommunikationsschnittstelle (4) eine Eingabe eines jeweils gewünschten Fluoreszenzfarbstoffs ermöglicht, und
wobei die Steuerung (3) die Betriebszustände der Filterträger (57, 60, 60', 76) und/oder der Anregungsstrahlenquelle (80) und/oder der Kalibriereinrichtung (57) in Abhängigkeit von einem jeweils über die Kommunikationsschnittstelle (4) angegebenen Fluoreszenzfarbstoff gemäß einer vorgegebenen Abhängigkeit steuert.

15. Mikroskopiesystem (1) nach einem der Ansprüche 1 bis 14,
wobei das Beobachtungssystem (2) wenigstens eine zweite Kamera (54) und einen vor der zweiten Kamera (54) angeordneten Filter (52) umfasst, wobei der zweiten Kamera (54) über den Filter (52) von dem zweiten Beobachtungsstrahlengang (32) geführte Beobachtungsstrahlung zuführbar ist, und wobei der Filter (52) ein für Nahbereichs-Infrarotstrahlung im wesentlichen durchlässiger Infrarotfilter oder ein Bandpassfilter mit einem Durchlassbereich für Wellenlängen zwischen 800 nm und 900 nm ist.

16. Mikroskopiesystem (1) nach einem der Ansprüche 1 bis 15, wobei die Lampe des Beleuchtungssystems (70) eine Xenonlampe (71) oder eine Halogenlampe ist.

## Claims

1. Microscopy system (1) for observing fluorescence from different fluorescent dyes in an object plane (22),
wherein the microscopy system (1) comprises an illumination system (70) for illuminating the object plane (22) with illumination radiation and an observation system (2) for providing a first observation beam path (33) for optical imaging of the object plane (22), wherein the observation system (2) comprises a camera (56) and a first observation filter carrier (60), wherein the observation filter carrier (60) carries at least two observation filters (61, 62) with different filter characteristics (61c, 62c), wherein the respective filter characteristic (61c, 62c) respectively comprises the fluorescence band of a fluorescent dye to be observed and simultaneously partly blocks the fluorescence band of a different fluorescent dye,
wherein the illumination system (70) comprises a first operating state, in which the illumination radiation has a spectrum which comprises a first excitation band (A1) of a first fluorescent dye and simultaneously is partly free from a second excitation band (A2) of a second fluorescent dye which is different from the first fluorescent dye, and
wherein the observation system (2) comprises a first operating state, in which a first observation filter carried by the observation filter carrier (60) is arranged in the first observation beam path (33), and observation radiation routed in the first observation beam path (33) therefore in sections has a spectrum which comprises a first fluorescence band (F1) of the first fluorescent dye,
wherein the illumination system (70) comprises at least a second operating state, in which the illumination radiation has a spectrum which comprises the second excitation band (A2) of the second fluorescent dye, and
wherein the observation system (2) comprises at least a second operating state, in which a second observation filter carried by the observation filter carrier (60) is arranged in the first observation beam path (33), and observation radiation routed in the first observation beam path (33) therefore in sections has a spectrum which is partly free from the first fluorescence band (F1) of the first fluorescent dye,
wherein, in at least one operating state of the illumination system (70), an illumination filter (77) carried by an illumination filter carrier (76) is arranged in an illumination beam path (75) provided by the illumination system (70), which illumination filter is transmissive to the excitation band (A1, A2) of a fluorescent dye to be observed and simultaneously substantially non-transmissive to the excitation band (A2, A1) of a different fluorescent dye, and the illumination system (70) comprises a lamp which is embodied to emit white light,
**characterized in that**
the first fluorescent dye is protoporphyrin IX and the second fluorescent dye is indocyanine green,
the observation system (2) furthermore comprises at least one infrared band elimination filter (57') carried by an infrared filter carrier (57), wherein the infrared filter carrier (57) is provided in addition to the observation filter carrier (60) and comprises a first operating state, in which the first observation beam path (33) is free from the infrared band elimination filter (57') in front of the camera (56), and a second operating state, in which the infrared band elimination filter (57') is arranged in front of the camera (56) in the first observation beam path (33), and
the microscopy system (1) furthermore comprises a control device (3), which is configured to selectively switch both the illumination system (70) and the observation system (2) and the infrared filter carrier (57) into the first operating state or switch both the illumination system (70) and the observation system (2) and the infrared filter carrier (57) into the second operating state.

2. Microscopy system (1) according to claim 1, wherein, in at least one operating state of the observation system (2), an observation filter (62) carried by a first observation filter carrier (60) is arranged in the first observation beam path (33), which observation filter is transmissive to the fluorescence band (F1) of an observed fluorescent dye and simultaneously substantially non-transmissive to the fluorescence band (F2) of a different fluorescent dye.

3. Microscopy system (1) according to either of claims 1 and 2,
wherein the observation system (2) comprises a second observation beam path (32) for optical imaging of the object plane (22),
wherein a second observation filter carrier (60') is arranged in the second observation beam path (32), which second observation filter carrier carries at least one further observation filter (61', 62') and is switchable between at least a first and a second operating state, and
wherein the control device (3) is configured to selectively switch both the illumination system (70) and the second observation filter carrier (60') into the first operating state or switch both the illumination system (70) and the second observation filter carrier (60') into the second operating state.

4. Microscopy system (1) according to claim 3, wherein, in the second operating state, the second observation filter carrier (60') carries a filter (62') which allows an observation of the fluorescence of the second fluorescent dye.

5. Microscopy system (1) according to claim 3 or 4, wherein at least one filter carrier (60') is switchable between a first operating state, in which a first filter (61') carried by the filter carrier (60') is arranged in the second observation beam path (32), and at least a second operating state, in which the first filter (61') carried by the filter carrier (60') is arranged outside of the second observation beam path (32).

6. Microscopy system (1) according to one of claims 1 to 5, wherein at least one filter carrier (60, 60', 76) comprises a carrying element rotatably mounted about a swivel axis (A), and provision is made for a drive (64, 64', 79) for rotating the carrying element, and the at least one filter (61, 61', 77) carried by the filter carrier (60, 60', 76) is arranged on the carrying element at a distance from the swivel axis (A).

7. Microscopy system (1) according to one of claims 1 to 6, wherein at least one filter carrier (57) comprises a linearly movable carrying element, and provision is made for a drive (58) for moving the carrying element, and the at least one filter (57') is arranged on the carrying element.

8. Microscopy system (1) according to one of claims 1 to 7, wherein at least one filter carrier (57*) carries a filter (57*'), which filter (57*') has a first filter characteristic in a first operating state of the filter carrier (57*) and which filter (57*') has a second filter characteristic in a second operating state of the filter carrier (57*), which second filter characteristic differs from the first filter characteristic.

9. Microscopy system (1) according to one of claims 1 to 8, wherein at least one filter carrier has a first operating state, in which a filter carried by the filter carrier includes a first angle of inclination with an epipolar ray of the respectively associated beam path, and a second operating state, in which the filter includes a second angle of inclination, different from the first angle of inclination, with the epipolar ray, wherein, for the at least two different angles of inclination, the filter has at least two different filter characteristics for radiation routed in the associated beam path, and provision is made for a drive for tilting the filter.

10. Microscopy system (1) according to one of claims 1 to 7,
wherein the illumination filter carrier (76) carries at least two illumination filters (77, 78) with different filter characteristics, and
wherein the first and/or second observation filter carrier (60, 60') carries at least two observation filters (61, 61', 62, 62') with different filter characteristics.

11. Microscopy system (1) according to one of claims 1 to 10, wherein the at least one illumination filter (77) and/or the at least one observation filter (61, 61', 62, 62') and/or the infrared band elimination filter (57') comprise a transmission filter or a reflection filter.

12. Microscopy system (1) according to one of the preceding claims,
wherein the microscopy system (1) furthermore comprises an excitation beam source (80) for illuminating the object plane (2) with excitation radiation, wherein the bandwidth of a spectrum of the excitation radiation is less than 200 nm and preferably less than 100 nm and substantially comprises the excitation band (A2) of a fluorescent dye to be observed, and wherein the excitation beam source (80) comprises a first operating state, in which excitation radiation is emitted, and a second operating state, in which no excitation radiation is emitted, and
wherein the control device (3) is configured to selectively switch both the excitation beam source (80) and the observation system (2) into the first operating state or switch both the excitation beam source (80) and the observation system (2) into the second operating state.

13. Microscopy system (1) according to one of the preceding claims,
wherein the illumination system (70) furthermore comprises a first camera (56), arranged in the first or second observation beam path (33, 32), for generating image data and a calibration apparatus (59), which calibration apparatus (59) obtains the image data generated by the camera (56) and comprises a first operating state, in which it performs a colour calibration on the image data, and a second operating state, in which it leaves the image data unchanged, and
wherein the control device (3) is configured to selectively switch both the illumination system (70) and the observation system (2) and the calibration apparatus (59) into the first operating state or switch both the illumination system (70) and the observation system (2) and the calibration apparatus (59) into the second operating state.

14. Microscopy system (1) according to one of claims 1 to 13,
wherein the microscopy system (1) furthermore comprises a communication interface (4) connected to the control device (3), which communication interface (4) enables an input of a respectively desired fluorescent dye, and wherein the control device (3) controls the operating states of the filter carriers (57, 60, 60', 76) and/or of the excitation beam source (80) and/or of the calibration apparatus (57) in accordance with a predetermined dependence, depending on a fluorescent dye respectively specified by means of the communication interface (4).

15. Microscopy system (1) according to one of claims 1 to 14,
wherein the observation system (2) comprises at least a second camera (54) and a filter (52) arranged in front of the second camera (54), wherein observation radiation routed via the filter (52) through the second observation beam path (32) can be supplied to the second camera (54), and wherein the filter (52) is an infrared filter substantially transmissive for near infrared radiation or a band pass filter with a pass range for wavelengths between 800 nm and 900 nm.

16. Microscopy system (1) according to one of claims 1 to 15, wherein the lamp of the illumination system (70) is a xenon lamp (71) or a halogen lamp.

## Revendications

1. Système de microscopie (1) destiné à observer les fluorescences de différents colorants fluorescents dans un plan d'objet (22),
le système de microscopie (1) comprenant un système d'éclairage (70) destiné à éclairer le plan d'objet (22) avec un rayonnement d'éclairage ainsi qu'un système d'observation (2) destiné à délivrer un premier trajet de rayon d'observation (33) destiné à la représentation optique du plan d'objet (22), le système d'observation (2) comprenant une caméra (56) et un porte-filtre d'observation (60), le porte-filtre d'observation (60) supportant au moins deux filtres d'observation (61, 62) ayant des caractéristiques de filtrage (61c, 62c) différentes, la caractéristique de filtrage (61c, 62c) correspondante incluant à chaque fois la bande de fluorescence d'un colorant fluorescent à observer et excluant en même temps partiellement la bande de fluorescence d'un autre colorant fluorescent,
le système d'éclairage (70) présentant un premier état opérationnel dans lequel le rayonnement d'éclairage présente un spectre qui comprend une première bande d'excitation (A1) d'un premier colorant fluorescent et, en même temps, est partiellement exempt d'une deuxième bande d'excitation (A2) d'un deuxième colorant fluorescent différent du premier colorant fluorescent, et
le système d'observation (2) présentant un premier état opérationnel dans lequel un premier filtre d'observation supporté par le porte-filtre d'observation (60) est disposé dans le premier trajet de rayon d'observation (33) et le rayonnement d'observation guidé dans le premier trajet de rayon d'observation (33) présente par conséquent, dans certaines portions, un spectre qui comprend une première bande de fluorescence (F1) du premier colorant fluorescent,
le système d'éclairage (70) présentant au moins un deuxième état opérationnel dans lequel le rayonnement d'éclairage présente un spectre qui comprend la deuxième bande d'excitation (A2) du deuxième colorant fluorescent, et
le système d'observation (2) présentant au moins un deuxième état opérationnel dans lequel un deuxième filtre d'observation supporté par le porte-filtre d'observation (60) est disposé dans le premier trajet de rayon d'observation (33) et le rayonnement d'observation guidé dans le premier trajet de rayon d'observation (33) présente par conséquent, dans certaines portions, un spectre qui est partiellement exempt de la première bande de fluorescence (F1) du premier colorant fluorescent,
dans au moins un état opérationnel du système d'éclairage (70), un filtre d'éclairage (77) supporté par un porte-filtre d'éclairage (76) étant disposé dans un trajet de rayon d'éclairage (75) fourni par le système d'éclairage (70), lequel est transparent pour la bande d'excitation (A1, A2) d'un colorant fluorescent à observer et, en même temps, est sensiblement opaque pour la bande d'excitation (A2, A1) d'un autre colorant fluorescent, et le système d'éclairage (70) comprenant une lampe qui est configurée pour émettre de la lumière blanche,
**caractérisé en ce que** le premier colorant fluorescent est de la protoprophyrine IX et le deuxième colorant fluorescent est du vert d'indocyanine,
le système d'observation (2) comprend au moins un filtre de blocage d'infrarouges (57') supporté par un porte-filtre à infrarouges (57), le porte-filtre à infrarouges (57) étant prévu en plus du porte-filtre d'observation (60) et présentant un premier état opérationnel dans lequel le premier trajet de rayon d'observation (33) ne traverse pas le filtre de blocage d'infrarouges (57') avant la caméra (56), et présente un deuxième état opérationnel dans lequel le filtre de blocage d'infrarouges (57') est disposé avant la caméra (56) dans le premier trajet de rayon d'observation (33), et
le système de microscopie (1) présente en outre une commande (3) qui est configurée pour, au choix, commuter à la fois le système d'éclairage (70) ainsi que le système d'observation (2) et le porte-filtre à infrarouges (57) dans le premier état opérationnel ou à la fois le système d'éclairage (70) ainsi que le système d'observation (2) et le porte-filtre à infrarouges (57) dans le deuxième état opérationnel.

2. Système de microscopie (1) selon la revendication 1, avec lequel dans au moins un état opérationnel du système d'observation (2), un filtre d'observation (62) supporté par le porte-filtre d'observation (60) est disposé dans le premier trajet de rayon d'observation (33), lequel est transparent pour la bande de fluorescence (F1) d'un colorant fluorescent observé et, en même temps, est sensiblement opaque pour la bande de fluorescence (F2) d'un autre colorant fluorescent.

3. Système de microscopie (1) selon l'une des revendications 1 ou 2, avec lequel le système d'observation (2) comprend un deuxième trajet de rayon d'observation (32) destiné à la représentation optique du plan d'objet (22),
un deuxième porte-filtre d'observation (60') étant disposé dans le deuxième trajet de rayon d'observation (32), lequel supporte au moins un filtre d'observation supplémentaire (61', 62') et peut être commuté entre au moins un premier et un deuxième états opérationnels, et
la commande (3) étant configurée pour commuter, au choix, à la fois le système d'éclairage (70) ainsi que le deuxième porte-filtre d'observation (60') dans le premier état opérationnel ou à la fois le système d'éclairage (70) ainsi que le deuxième porte-filtre d'observation (60') dans le deuxième état opérationnel.

4. Système de microscopie (1) selon la revendication 3, avec lequel le deuxième porte-filtre d'observation (60') dans le deuxième état opérationnel supporte un filtre (62') qui permet une observation de la fluorescence du deuxième colorant fluorescent.

5. Système de microscopie (1) selon la revendication 3 ou 4, avec lequel au moins un porte-filtre (60') peut être commuté entre un premier état opérationnel, dans lequel le premier filtre (61') supporté par le porte-filtre (60') est disposé dans le deuxième trajet de rayon d'observation (32), et au moins un deuxième état opérationnel, dans lequel le premier filtre (61') supporté par le porte-filtre (60') est disposé en-dehors du deuxième trajet de rayon d'observation (32).

6. Système de microscopie (1) selon l'une des revendications 1 à 5, avec lequel au moins un porte-filtre (60, 60', 70') présente un élément porteur monté pivotant autour d'un axe de pivotement (A) et il existe un mécanisme d'entraînement (64, 64', 79) pour faire tourner l'élément porteur, et l'au moins un filtre (61, 61', 77) supporté par le porte-filtre (60, 60', 70') est disposé sur l'élément porteur en étant espacé de l'axe de pivotement (A).

7. Système de microscopie (1) selon l'une des revendications 1 à 6, avec lequel au moins un porte-filtre (57) présente un élément porteur à mobilité linéaire, et il existe un mécanisme d'entraînement (58) pour déplacer l'élément porteur, et l'au moins un filtre (57') est disposé sur l'élément porteur.

8. Système de microscopie (1) selon l'une des revendications 1 à 7, avec lequel au moins un porte-filtre (57*) supporte un filtre (57*'), ledit filtre (57*') présente une première caractéristique de filtrage dans un premier état opérationnel du porte-filtre (57*), et ledit filtre (57*') présente une deuxième caractéristique de filtrage, différente de la première caractéristique de filtrage, dans un deuxième état opérationnel du porte-filtre (57*).

9. Système de microscopie (1) selon l'une des revendications 1 à 8, avec lequel au moins un porte-filtre présente un premier état opérationnel, dans lequel un filtre supporté par le porte-filtre forme avec un rayon central du trajet de rayon respectivement associé un premier angle d'inclinaison, et présente aussi un deuxième état opérationnel, dans lequel le filtre forme avec le rayon central un deuxième angle d'inclinaison différent du premier angle d'inclinaison, le filtre présentant au moins deux caractéristiques de filtrage pour les au moins deux angles d'inclinaison différents pour le rayonnement acheminé dans le trajet de rayon associé, et il est prévu un mécanisme d'entraînement pour basculer le filtre.

10. Système de microscopie (1) selon l'une des revendications 1 à 7, avec lequel le porte-filtre d'éclairage (76) supporte au moins deux filtres d'éclairage (77, 78) ayant des caractéristiques de filtrage différentes, et le premier et/ou le deuxième porte-filtre d'observation (60, 60') supporte au moins deux filtres d'observation (61, 61', 62, 62') ayant des caractéristiques de filtrage différentes.

11. Système de microscopie (1) selon l'une des revendications 1 à 10, avec lequel l'au moins un filtre d'éclairage (77) et/ou l'au moins un filtre d'observation (61, 61', 62, 62') et/ou le filtre de blocage d'infrarouges (57') comprennent un filtre à transmission ou un filtre à réflexion.

12. Système de microscopie (1) selon l'une des revendications précédentes,
avec lequel le système de microscopie (1) présente en outre une source de rayonnement d'excitation (80) destinée à l'éclairage du plan d'objet (2) avec un rayonnement d'excitation, la largeur de bande d'un spectre du rayonnement d'excitation étant inférieure à 200 nm et de préférence inférieure à 100 nm et incluant sensiblement la bande d'excitation (A2) d'un colorant fluorescent à observer, et la source de rayonnement d'excitation (80) présentant un premier état opérationnel dans lequel est émis le rayonnement d'excitation, et présente un deuxième état opérationnel dans lequel aucun rayonnement d'excitation n'est émis, et
avec lequel la commande (3) est configurée pour commuter, au choix, à la fois la source de rayonnement d'excitation (80) et le système d'observation (2) dans le premier état opérationnel ou à la fois la source de rayonnement d'excitation (80) et le système d'observation (2) dans le deuxième état opérationnel.

13. Système de microscopie (1) selon l'une des revendications précédentes, avec lequel le système d'éclairage (70) comprend en outre une première caméra (56) destinée à générer des données d'image disposée dans le premier ou le deuxième trajet de rayon d'observation (33, 32), ainsi qu'un dispositif de calibrage (59), ledit dispositif de calibrage (59) recevant les données d'image générées par la caméra (56) et présentant un premier état opérationnel dans lequel il effectue le calibrage couleur des données d'image, et présentant un deuxième état opérationnel dans lequel il laisse les données d'image inchangées, et
avec lequel la commande (3) est configurée pour commuter, au choix, à la fois le système d'éclairage (70) et le système d'observation (2) ainsi que le dispositif de calibrage (59) dans le premier état opérationnel ou à la fois le système d'éclairage (70) et le système d'observation (2) ainsi que le dispositif de calibrage (59) dans le deuxième état opérationnel.

14. Système de microscopie (1) selon l'une des revendications 1 à 13,
avec lequel le système de microscopie (1) présente en outre une interface de communication (4) reliée avec la commande (3), ladite interface de communication (4) permettant une saisie d'un colorant fluorescent respectivement souhaité, et
la commande (3) commandant les états opérationnels des porte-filtres (57, 60, 60', 76) et/ou de la source de rayonnement d'excitation (80) et/ou du dispositif de calibrage (57) en fonction d'un colorant fluorescent respectivement indiqué par le biais de l'interface de communication (4) conformément à une dépendance prédéfinie.

15. Système de microscopie (1) selon l'une des revendications 1 à 14,
avec lequel le système d'observation (2) comprend au moins une deuxième caméra (54) et un filtre (52) disposé devant la deuxième caméra (54), du rayonnement d'observation guidé par le deuxième trajet de rayon d'observation (32) pouvant être acheminée à la deuxième caméra (54) par le biais du filtre (52), et le filtre (52) étant un filtre à infrarouges sensiblement transparent pour le rayonnement infrarouge dans la zone de proximité ou un filtre passe-bande ayant une bande de transmission pour les longueurs d'onde comprises entre 800 nm et 900 nm.

16. Système de microscopie (1) selon l'une des revendications 1 à 15, avec lequel la lampe du système d'éclairage (70) est une lampe au xénon (71) ou une lampe halogène.
